(19) Europäisches Patentamt
European Patent Office
Office européen des brevets

(11) EP 2 429 286 B1

(12) EUROPÄISCHE PATENTSCHRIFT

(45) Veröffentlichungstag und Bekanntmachung des Hinweises auf die Patenterteilung:
**19.08.2015 Patentblatt 2015/34**

(21) Anmeldenummer: **10718190.1**

(22) Anmeldetag: **10.05.2010**

(51) Int Cl.:
***A01N 25/30*** $^{(2006.01)}$ ***A01N 47/02*** $^{(2006.01)}$
***A01P 7/04*** $^{(2006.01)}$ ***A01P 15/00*** $^{(2006.01)}$
***A01N 53/00*** $^{(2006.01)}$ ***A01N 43/36*** $^{(2006.01)}$
***A01N 43/54*** $^{(2006.01)}$ ***A01N 43/56*** $^{(2006.01)}$
***A01N 47/34*** $^{(2006.01)}$

(86) Internationale Anmeldenummer:
**PCT/EP2010/056348**

(87) Internationale Veröffentlichungsnummer:
**WO 2010/130680 (18.11.2010 Gazette 2010/46)**

(54) **POLYMERE ZUR ERHÖHUNG DER BODENBEWEGLICHKEIT VON SCHWER LÖSLICHEN INSEKTIZIDEN**

POLYMERS FOR INCREASING THE SOIL MOBILITY OF LOW-SOLUBILITY INSECTICIDES

POLYMÈRES PERMETTANT D'AUGMENTER LA MOBILITÉ DANS LE SOL D'INSECTICIDES PEU SOLUBLES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **11.05.2009 US 177030 P**
**24.06.2009 EP 09163674**

(43) Veröffentlichungstag der Anmeldung:
**21.03.2012 Patentblatt 2012/12**

(73) Patentinhaber: **BASF SE**
**67056 Ludwigshafen (DE)**

(72) Erfinder:
- **ISHAQUE, Michael**
  **68165 Mannheim (DE)**
- **JUNG, Marc, Rudolf**
  **67551 Worms (DE)**
- **TÜRK, Holger**
  **68161 Mannheim (DE)**
- **SCHRÖDER-GRIMONPONT, Tina**
  **76764 Rheinzabern (DE)**
- **REINHARD, Klaus**
  **67354 Römerberg (DE)**
- **SCHNABEL, Gerhard**
  **63820 Elsenfeld (DE)**
- **KLEIN, Clark, D.**
  **Pittsboro**
  **NC 27312 (US)**
- **HOLT, Thomas, J.**
  **Holly Springs**
  **NC 27540 (US)**
- **MASCIANICA, Martin, P.**
  **Chapel Hill**
  **NC 27514 (US)**

(56) Entgegenhaltungen:
**EP-A2- 0 649 649** **WO-A1-2008/058848**
**WO-A1-2008/064986** **WO-A1-2008/065050**
**WO-A1-2009/021986** **WO-A1-2009/040248**
**WO-A1-2010/130599** **WO-A2-03/053345**
**WO-A2-2006/087227** **WO-A2-2008/064990**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 429 286 B1

## Beschreibung

Die Erfindung betrifft die Verwendung bestimmter Polymere zur Erhöhung der Bodenbeweglichkeit von Insektiziden mit geringer Wasserlöslichkeit, insektizide Wirkstoffzusammensetzungen mit erhöhter Bodenbeweglichkeit sowie ein Verfahren zur Bekämpfung von bodenbürtigen Schädlingen, insbesondere Termiten.

Viele Schädlingsbekämpfungsmittel enthalten Wirkstoffe, die nach dem Aufbringen kaum oder gar keine Bodenbeweglichkeit aufweisen. In bestimmten Fällen ist jedoch eine erhöhte und kontrollierte Bodenbeweglichkeit von Vorteil, beispielsweise bei der Bekämpfung von bodenbürtigen Schädlingen, insbesondere Termiten.

Will man Wirkstoffe mit geringer Bodenbeweglichkeit in tiefere Bodenschichten (kontrolliert) überführen, bieten sich fast ausschließlich mechanische Möglichkeiten an: das Ausheben von Gräben und direktes Behandeln der Grabenwände sowie das Einspritzen der Wirkstoffformulierung unter Druck in tiefere Bodenschichten sind Beispiele dafür. Solche Methoden erfordern ein hohes Maß an Arbeitseinsatz und/oder technischer Mittel.

Daneben ist auch der Einsatz von bestimmten Formulierungshilfsstoffen bekannt, um die Bodenbeweglichkeit von Wirkstoffen zu erhöhen. In der WO 03/053345 ist die Verwendung spezifischer Formulierungshilfsstoffe (Adjuvantien) beschrieben, mit denen die Bodenbeweglichkeit bestimmter Wirkstoffe, insbesondere Pyrethroide, um mindestens 20% verbessert wird. Bei den Adjuvantien handelt es sich unter anderen um Polymere, wie modifizierte Polyether. In der US-A 4,303,642 sind Polymerlatizes zur Verbesserung der Bodenbeweglichkeit von Chlorpyrifos und Chlorpyrifos-Methyl beschrieben.

Obwohl mit den beschriebenen Systemen bereits gute Ergebnisse erzielt werden, bleibt doch ein breiter Raum für Verbesserungen.

Aufgabe der Erfindung ist es, Verbindungen bereitzustellen, welche die Bodenbeweglichkeit von schwerlöslichen an Boden hoch absorptiven Insektiziden verbessern, so dass der Wirkstoff ohne oder mit verringertem Arbeitsaufwand in tiefere Bodenschichten gelangt.

Es wurde gefunden, dass sich die Bodenbeweglichkeit von schwerlöslichen Insektiziden erhöhen lässt, wenn der Wirkstoff in Kombination mit einem polymeren Solubilisator eingesetzt wird.

Aus der WO 2008/064990, WO2008/065050, WO 2008/064986, WO 2008/064987, WO 2008/040786, WO 2008/058848 und WO 2006/018135 ist bereits bekannt, dass bestimmte Polymere die Wasserlöslichkeit und/oder Systemizität von Fipronil und anderen Insektiziden erhöhen.

Da die Bodenbeweglichkeit eines Wirkstoffs jedoch im Wesentlichen vom so genannten Bodenabsorptionskoeffizienten $K_{o/c}$ abhängt, lässt sich aus einer erhöhten Wasserlöslichkeit nicht auf eine bessere Bodenbeweglichkeit schließen.

Gegenstand der Erfindung ist daher die Verwendung eines polymeren Solubilisators zur Erhöhung der Bodenbeweglichkeit eines schwerlöslichen Insektizids, wobei der polymere Solubilisator die Eigenschaft besitzt, dass der insektizide Wirkstoff in einer 1 gew.-%igen wässrigen Lösung des polymeren Solubilisators bei 25°C und 1,01325 bar eine mindestens vierzigmal höhere Löslichkeit aufweist als unter gleichen Bedingungen in reinem Wasser, und wobei das Gewichtsverhältnis von Wirkstoff zu Solubilisator $\leq 1$ ist, und wobei der Solubilisator gewählt ist aus den Gruppen A1, B1 und D:

A1. Hyperverzweigte Polycarbonate, bei denen das hyperverzweigte Polycarbonat verknüpft ist mit mindestens einem linearen oder Kamm-förmigen Polymer und/oder mindestens einer funktionalen $C_1$-$C_{24}$-Einheit enthaltend eine Säuregruppe, eine Aminogruppe oder mindestens zwei Hydroxygruppen;

B1. Vinyllactam-Copolymere, erhältlich aus

B1-1. 60-99 Gew.-% (bezogen auf das gesamte Copolymer) 5-7 gliedrigem 1-Vinyl-2-lactam und

B1-2. 1 bis 40 Gew.-% mindestens eines Monomeren ausgewählt aus der Gruppe der

B1-21 $C_8$-$C_{30}$-Alkylester von monoethylenisch ungesättigten $C_3$-$C_8$-Carbonsäuren,

B1-22 N-Alkyl- oder N,N-Dialkylsubstituierten Amide der Acrylsäure oder der Methacrylsäure mit $C_8$ bis $C_{30}$-Alkylresten,

B1-23 Vinylester von aliphatischen unverzweigten $C_8$-$C_{30}$-Carbonsäuren,

B1-24 der $C_8$-$C_{30}$-Alkyl-Vinylether,

wobei sich die Gew.-%-Angaben der Einzelkomponenten zu 100 Gew.-% addieren;

D. Copolymere basierend auf ethylenisch ungesättigten Dicarboxylmono- und -diestern, erhältlich aus

D1 mindestens einem Monomer aus der Gruppe der Olefine, Vinylether und Styrol und

D2 mindestens einem Monomer aus der Gruppe der Mono- und Diester von ethylenisch ungesättigten Dicarbonsäuren, wobei die Alkoholgruppe der Ester eine Struktur der Formel (V) hat,

$$-(R^{10}-O)_n-(R^{11}-O)_p-R^{12} \qquad (V)$$

wobei die Symbole und Indizes folgende Bedeutung haben:
$R^{10}$ ist 1,2-Propylen oder 2,3-Propylen;
$R^{11}$ ist Ethylen;
$R^{12}$ ist H, unverzweigtes oder verzweigtes $C_1$-$C_{40}$-Alkyl, Phenyl, Phenyl substituiert mit $C_1$-$C_{20}$-Alkyl, Benzyl, Benzyl substituiert mit $C_1$-$C_{20}$-Alkyl;
n ist eine ganze Zahl von 0 bis 140 und
p ist eine ganze Zahl von 0 bis 100,wobei die Summe von n und p mindestens 1 ist.

Weiterhin Gegenstand der Erfindung ist ein Verfahren zur Verbesserung der Bodenbeweglichkeit von schwerlöslichen Insektiziden, wobei man eine Kombination aus Insektizid und einem erfindungsgemäßen polymeren Solubilisator in einer wässrigen Applikationsform auf den zu behandelnden Boden aufbringt.

Die Erfindung ermöglicht eine deutliche Erhöhung der Bodenbeweglichkeit von schwerlöslichen insektiziden Wirkstoffen, insbesondere solchen mit hohem $K_{o/c}$ Wert. Die erfindungsgemäßen Kombinationen aus Wirkstoff und Solubilisator zeigen bei Bodenapplikationen zudem eine erhöhte biologische Aktivität. Weiterhin ist die physikalische Stabilität der Formulierungen sowie der daraus erhaltenen Spritzbrühen verbessert.

Der Begriff Insektizid im Sinne der Erfindung umfasst, soweit aus dem Zusammenhang nichts anderes hervorgeht, neben Insektiziden im engeren Sinne, das heißt zur Bekämpfung von Insekten geeigneten Wirkstoffen, auch weitere zur Bekämpfung von bodenbürtigen, invertebraten Schädlingen geeignete Wirkstoffe, insbesondere Nematizide und Akarizide.

Ein Termitizid im Sinne der Erfindung ist ein zur Bekämpfung von Termiten geeigneter insektizider Wirkstoff.

Soweit aus dem Zusammenhang nichts anderes hervorgeht, bezieht sich der Begriff "schwerlöslich" auf die Löslichkeit in Wasser und bedeutet im Sinne der Erfindung, dass der insektizide Wirkstoff eine Wasserlöslichkeit von weniger als 1 g/l, vorzugsweise weniger als 0,65 g/l, besonders bevorzugt weniger als 0,1 g/l, insbesondere weniger als 0,01 g/l bei 25°C und 1013 mbar aufweist.

Die erfindungsgemäß eingesetzten schwerlöslichen Termitizide weisen bevorzugt einen Bodenabsorptionskoeffizienten Ko/c von > 250, besonders bevorzugt > 400 auf.

Der $K_{o/c}$ beschreibt die Verteilung eines Wirkstoffs zwischen der organischen Komponente des Bodens und einer wässrigen Lösung. Hohe $K_{o/c}$-Werte zeigen eine starke Bindung der Wirkstoffe an die organische Bodensubstanz an, die Bodenbeweglichkeit ist daher geringer als bei solchen Wirkstoffen mit niedrigeren $K_{o/c}$-Werten. Der $K_{o/c}$ Wert berchnet sich nach der Formel:

$$K_{o/c} = K_d \times 100 / C_{org} [\%]$$

wobei der Kd-Wert den Verteilungskoeffizient Boden/Wasser für ein Wirkstoffgleichgewicht und $C_{org}$ den Kohlenstoffanteil des Bodens in % bezeichnen.

Die experimentelle Vorgehensweise bei $K_{o/c}$-Wert-Bestimmungen ist detailliert in OECD Richtlinie Nr. 106 beschrieben. Dabei wird eine Suspension aus Boden und 0,01 M $CaCl_2$-Lösung hergestellt. Zu dieser Suspension gibt man (vorzugsweise radioaktiv markierten) Wirkstoff in (im einfachsten Fall) einer Konzentration gelöst in sehr wenig organischem Lösungsmittel und lässt den Ansatz leicht schütteln. Wenn sich nach einigen Stunden ein Gleichgewicht der Konzentrationen des Wirkstoffs in beiden Phasen ausgebildet hat, wird die Konzentration im Boden sowie in der $CaCl_2$-Lösung bestimmt. Aus dem Quotienten der Konzentrationen im Boden und in der $CaCl_2$-Lösung erhält man den $K_d$-Wert, aus dem unter Einbeziehung des organischen Kohlenstoffanteils des Bodens der $K_{o/c}$-Wert für den jeweiligen Boden resultiert. Als Standardboden gilt erfindungsgemäß der Boden "LUFA 2.3" (sandiger Lehm [nach USDA Klassifizierung], mit einem pH-Wert von ca. 7 [gemessen in $CaCl_2$] und einem Gehalt an organischem Kohlenstoff von ca. 1,1 %).

Als wenig mobil werden Wirkstoffe mit einem $K_{o/c}$-Wert von > 250 angesehen.

Bevorzugt ist die Verwendung eines Insektizids mit einer Wasserlöslichkeit von < 1,0 g/l bei 25°C und 1013 mbar und einem $K_{o/c}$-Wert von > 250.

Bevorzugt ist die Verwendung eines schwerlöslichen Insektizids, insbesondere Termitizids, aus der Gruppe Fipronil, Pyrethroide, 4-Chlor-2-(2-chlor-2methylpropyl)-5-[(6-iod-3pyridinyl)methoxy]-3(2H)-pyridazinone (CAS-RN: 120955-77-3), Chlorantraniliprole, Chlorfenapyr, Chlorpyrifos, Cyantraniliprole, Fenoxycarb, Flufenoxuron, Hydramethylnon, Imidacloprid, Indoxacarb, Metaflumizone, Pyriproxifen und Tebufenozide.

Bevorzugt als Termitizid sind Fipronil, Allethrin, Alpha-Cypermethrin, Beta-Cyfluthrin, Bifenthrin, Bioallethrin, 4-Chlor-2-(2-chlor-2methylpropyl)-5-[(6-iod-3-pyridinyl)methoxy]-3(2H)-pyridazinone (CAS-RN: 120955-77-3), Chlorantraniliprole, Chlorfenapyr, Chlorpyrifos, Cyantraniliprole, Cyfluthrin, Cyhalothrin, Cypermethrin, Deltamethrin, Etofenprox, Fenoxycarb, Flufenoxuron, Hydramethylnon, Imidacloprid, Indoxacarb, Metaflumizone, Permethrin, Pyriproxifen, Tebufenozide und Tralomethrin.

Besonders bevorzugt sind Fipronil, Alpha-Cypermethrin, Bifenthrin, Chlorantraniliprole Chlorfenapyr, Cyfluthrin, Cypermethrin, Cyantraniliprole, Deltamethrin, Etofenprox, Hydramethylnon, Indoxacarb, Metaflumizone und Permethrin.

Ganz besonders bevorzugt sind Fipronil, Alpha-Cypermethrin, Chlorantraniliprole, Chlorfenapyr, Cyantraniliprole, Deltamethrin, Hydramethylnon, Indoxacarb und Metaflumizone.

Insbesondere bevorzugt ist Fipronil.

Bevorzugt ist die Verwendung eines (1) schwerlöslichen insektiziden Wirkstoffs.

Weiterhin bevorzugt ist die Verwendung von zwei oder mehreren, besonders bevorzugt zwei oder drei schwerlöslichen insektiziden Wirkstoffen, insbesondere von Mischungen der genannten Insektizide.

Bevorzugt ist die Verwendung von Fipronil in Mischung mit einem oder mehreren Pyrethroiden, insbesondere Alpha-Cypermethrin und/oder Deltamethrin, oder Metaflumizone oder Boraten.

Gegebenenfalls kann der erfindungsgemäß verwendete schwerlösliche insektizide Wirkstoff auch in Mischung mit weiteren pestiziden Wirkstoffen, insbesondere weiteren insektiziden oder fungiziden Wirkstoffen eingesetzt werden. Bevorzugt ist beispielsweise eine Mischung von Fipronil und Metaflumizone.

Die genannten pestiziden, insbesondere insektiziden Wirkstoffe sind kommerziell erhältlich und beispielsweise in C.D.S. Tomlin (Hrsg.), The Pesticide Manual, 14. Auflage, British Crop Production Council, Alton 2006, beschrieben. Cyantraniliprole ist 3-Brom-N-[4-cyano-2-methyl-6-(methylcarbamoyl)phenyl]-1-(3-chlorpyridin-2-yl)-1 H-pyrazol-5-carboxamid (DPX-HGW86, Cyazypyr®).

Zur Erhöhung der Bodenbeweglichkeit des schwerlöslichen Insektizids werden erfindungsgemäß ein oder mehrere polymere Solubilisatoren verwendet. Erfindungsgemäß bedeutet polymerer Solubilisator ein Polymer, aus den Gruppen A1, B1 und D vorzugsweise mit einem Molgewicht $M_n$ > 1000g/mol, welches die Eigenschaft aufweist, dass der insektizide Wirkstoff in einer 1 gew.-%igen wässrigen Lösung des polymeren Solubilisators bei 25°C und 1013 mbar eine mindestens vierzig-, bevorzugt fünfzigmal höhere Löslichkeit aufweist als unter gleichen Bedingungen in reinem Wasser.

Die Qualifikation als erfindungsgemäß zu verwendender polymerer Solubilisator ergibt sich für ein bestimmtes Polymer also in Beziehung zu einem bestimmten, erfindungsgemäßen Insektizid.

Bevorzugt als polymerer Solubilisator sind Polymere, aus den Gruppen A1, B1 und D in deren 1 gew.-%iger wässriger Lösung das Insektizid Fipronil bei 25°C und 1013 mbar eine Löslichkeit von mindestens 100 mg/l aufweist.

Die Löslichkeit kann nach bekannten Methoden bestimmt werden; erfindungsgemäß ist eine UV-spektroskopische Messung bevorzugt. Dabei wird zunächst bei geeigneter Wellenlänge in verschiedenen Konzentrationen eine Kalibrierung mit dem zu bestimmenden Wirkstoff durchgeführt. Zur Untersuchung der Solubilisierung mit einem polymeren Solubilisator wird eine 1 gew.-%ige Polymerlösung hergestellt und die UV Absorption bei besagter Wellenlänge vermessen. Die Polymerlösung wird mit dem zu vermessenden Wirkstoff gesättigt und 24h äquillibriert. Nach Zentrifugation der Lösung und UV Messung des Überstandes bei besagter Wellenlänge kann nach Abzug der Polymerabsorption über die Kalibrationskurve auf die gelöste Wirkstoffkonzentration geschlossen werden.

Unter Solubilisierung ist das Löslichmachen von in einem bestimmten Lösungsmittel, insbesondere Wasser, schwer- oder unlöslichen Substanzen durch grenzflächenaktive Verbindungen, die Solubilisatoren, zu verstehen. Solubilisatoren sind in der Lage, schlecht wasserlösliche oder wasserunlösliche Wirkstoffe in klare, höchstens opaleszierende wässrige Lösungen zu überführen, ohne dass hierbei die chemische Struktur dieser Stoffe eine Veränderung erfährt (vgl. Römpp Chemie Lexikon, 9. Auflage, Bd. 5, S. 4203, Thieme Verlag, Stuttgart, 1992).

Die hergestellten Solubilisate sind dadurch gekennzeichnet, dass der schlecht wasserlösliche oder wasserunlösliche Stoff in den Molekülassoziaten der oberflächenaktiven Verbindungen, die sich in wässriger Lösung bilden, wie beispielsweise hydrophobe Domänen oder Mizellen, kolloidal gelöst vorliegt. Die resultierenden Lösungen sind stabile oder metastabile einphasige Systeme, die optisch klar bis opaleszent erscheinen.

Die erfindungsgemäßen verwendeten Solubilisatoren bewirken vorzugsweise eine Verbesserung der vertikalen und/oder horizontalen Bodenbeweglichkeit des Wirkstoffs um 20%, besonders bevorzugt 50%, insbesondere 100%, im Vergleich zu einer identischen Applikation ohne polymeren Solubilisator.

Gruppe A1

Geeignet sind hyperverzweigte Polycarbonate (A1), die mit ihrer Herstellung in der zeitgleich eingereichten Europäischen Patentanmeldung EP 09159881.3 (= WO 2010/130599 A1) mit dem Titel "Hyperverzweigte Polycarbonate zur Solubilisierung schwerlöslicher Wirkstoffe" beschrieben sind und bei denen das hyperverzweigte Polycarbonat verknüpft ist mit mindestens einem linearen oder Kamm-förmigen Polymer und/oder mindestens einer funktionalen $C_1$-$C_{24}$-Einheit enthaltend eine Säuregruppe, eine Aminogruppe oder mindestens zwei Hydroxygruppen.

Bevorzugt sind hyperverzweigte Polycarbonate A1, bei denen das Polycarbonat einen Alkohol A enthält, der ein tri- oder höherfunktionelles Polyetherol ist auf Basis von Alkoholen, die mindestens drei OH-Gruppen aufweisen, und $C_3$-$C_{24}$ Alkylenoxid. Bevorzugt sind insbesondere hyperverzweigte Polycarbonate A1, bei denen das lineare Polymer

a) ein Homopolymer oder statistisches Copolymer enthaltend ein polares, ethylenisch ungesättigtes Monomer,
b) ein Blockpolymer enthaltend einen Block aus Polyethylenglykol oder auf Basis eines polaren, ethylenisch ungesättigten Monomer, oder
c) ein Polykondensat enthaltend Polyethylenglykol, oder
d) ein Polyethylenglykol

ist, wobei das Polyethylenglykol d) über einen Linker, bevorzugt eine Carbonat-, Harnstoff- oder Urethangruppe, besonders bevorzugt eine Urethangruppe, mit dem Polycarbonat vernüpft ist.

Bevorzugt sind auch hyperverzweigte Polycarbonate A1, bei denen das polare, ethylenisch ungesättigte Monomer Vinylpyrrolidon, (Meth)Acrylsäure, ein Sulfonsäure-haltiges Monomer, ein Amino-funktionelles Monomer oder ein (Meth)Acrylsäureester von einem Polyethylenglykolderivat ist.

Bevorzugt sind auch hyperverzweigte Polycarbonate A1, bei denen das Kamm-förmige Polymer Polyethylenglykol-mono(meth)acrylat oder oder Allylalkoholalkoxylat in polymerisierter Form enthält.

Bevorzugt sind auch hyperverzweigte Polycarbonate A1, bei denen die funktionale $C_1$-$C_{24}$-Einheit eine Carbonsäuregruppe, eine Sulfonsäuregruppe, eine Sulfensäuregruppe, eine Sulfinsäuregruppe, eine Schwefelsäureestergruppe (d.h. ein organisches Sulfat), eine Aminogruppe oder mindestens zwei Hydroxy-$C_2$-$C_{10}$-alkylgruppen enthält.

Bevorzugt sind auch hyperverzweigte Polycarbonate A1, bei denen das Amphiphil ein hyperverzweigtes Polycarbonat enthält, das verknüpft ist mit mindestens einem linearen oder Kamm-förmigen Polymer.

Bevorzugt sind auch hyperverzweigte Polycarbonate A1, bei denen das Polycarbonatverknüpft ist mit mindestens einem linearen oder Kamm-förmigen Polymer, dadurch gekennzeichnet, dass das lineare Polymer

a) ein Homopolymer oder statistisches Copolymer enthaltend ein polares, ethylenisch ungesättigtes Monomer,
b) ein Blockpolymer enthaltend einen Block aus Polyethylenglykol oder auf Basis eines polaren, ethylenisch ungesättigten Monomer oder
c) ein Polykondensat enthaltend Polyethylenglykol oder
d) ein Polyethylenglykol

ist, wobei das Polyethylenglykol d) über einen Linker, bevorzugt eine Carbonat-, Harnstoff- oder Urethangruppe, besonders bevorzugt eine Urethangruppe, mit dem Polycarbonat verknüpft ist.

Bevorzugt sind auch hyperverzweigte Polycarbonate A1, bei denen das Polycarbonat erhältlich ist durch

a) Herstellung eines Kondensationsproduktes (K) durch Umsetzung eines organisches Carbonats (A) oder eines Phosgenderivates mit einem Alkohol (B1), der mindestens drei Hydroxygruppen aufweist, und
b) intermolekularer Umsetzung von K zu dem hyperverzweigten Polycarbonat, wobei das Mengenverhältnis der OH-Gruppen zu den Carbonat- oder Phosgengruppen so gewählt wird, dass K im Mittel entweder i) eine Carbonat- oder Carbamoylchloridgruppe und mehr als eine OH-Gruppe, oder ii) eine OH-Gruppe und mehr als eine Carbonat- oder Carbamoylgruppe aufweisen.

Bevorzugt sind auch hyperverzweigte Polycarbonate A1, bei denen das Kamm-förmige Polymer Polyethylenglykol-mono(meth)acrylat in polymerisierter Form enthält.

Das hyperverzweigte Polycarbonat A1 ist üblicherweise erhältlich durch

a) Herstellung eines Kondensationsproduktes (K) durch Umsetzung eines organisches Carbonats (A) oder eines Phosgenderivates mit einem Alkohol (B1), der mindestens drei Hydroxygruppen aufweist, und
b) intermolekularer Umsetzung von K zu dem hyperverzweigten Polycarbonat,

wobei das Mengenverhältnis der OH-Gruppen zu den Carbonat- oder Phosgengruppen so gewählt wird, dass K im Mittel

entweder i) eine Carbonat- oder Carbamoylchloridgruppe und mehr als eine OH-Gruppe, oder ii) eine OH-Gruppe und mehr als eine Carbonat- oder Carbamoylgruppe aufweist. Bevorzugt wird das Polycarbonat auf diese Weise erhalten.

Zur Herstellung des Kondensationsproduktes (K) kann ein organisches Carbonat (A) oder ein Phosgenderivat verwendet werden. Geeignete Phosgenderivate sind beispielsweise Phosgen, Diphosgen oder Triphosgen, bevorzugt Phosgen. Bevorzugt wird ein organisches Carbonat eingesetzt.

Bei den Resten R der als Ausgangsmaterial eingesetzten organischen Carbonate (A) der allgemeinen Formel $RO[(CO)O]_nR$ handelt es sich jeweils unabhängig voneinander um einen geradkettigen oder verzweigten aliphatischen, aromatisch/aliphatischen (araliphatischen) oder aromatischen Kohlenwasserstoffrest mit 1 bis 20 C-Atomen. Die beiden Reste R können auch unter Bildung eines Ringes miteinander verbunden sein. Die beiden Reste R können gleich oder unterschiedlich sein, bevorzugt sind sie gleich. Bei den Carbonaten kann es sich bevorzugt um einfache Carbonate der allgemeinen Formel RO(CO)OR handeln, d.h. in diesem Falle steht n für 1.

Beispiele geeigneter Carbonate umfassen aliphatische, aromatisch/aliphatische oder aromatische Carbonate. Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Di-n-propylcarbonat, Di-n-butylcarbonat oder Diisobutylcarbonat. Speziell bevorzugt wird Diethylcarbonat.

Der Alkohol (B1), der mindestens drei Hydroxygruppen aufweist, ist meist ein aliphatischer oder aromatischer Alkohol, oder ein Gemisch zweier oder mehrerer verschiedener dieser Alkohole. Der Alkohol (B1) kann verzweigt oder unverzweigt, substituiert oder unsubstituiert sein und 3 bis 26 Kohlenstoffatome aufweisen. Bevorzugt handelt es sich um einen aliphatischen Alkohol. Beispiele für Verbindungen mit mindestens drei OH-Gruppen umfassen Glycerin, Trimethylolmethan, Trimethylolethan, Trimethylolpropan, Trimethylolbutan, 1,2,4-Butantriol, 1,2,3-Hexantriol, 1,2,4-Hexantriol, Tris(hydroxy-methyl)amin, Tris(hydroxyethyl)amin, Tris(hydroxy-propyl)amin, Pentaerythrit, Diglycerin, Triglycerin, Polyglycerine, Bis(tri-methylol-propan), Tris(hydroxymethyl)isocyanurat, Tris(hydroxyethyl)isocyanurat, Phloroglucinol, Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, Zucker, wie zum Beispiel Glucose, Zuckerderivate, wie z.B. Sorbit, Mannit, Diglycerol, Threit, Erythrit, Adonit (Ribit), Arabit (Lyxit), Xylit, Dulcit (Galactit), Maltit, Isomaltit, oder Polyesterol. Des weiteren kann B1 ein tri- oder höherfunktioneller Polyetherol sein auf Basis von Alkoholen, die mindestens drei OH-Gruppen aufweisen, und $C_2$-$C_{24}$ Alkylenoxid. Speziell enthält das Polyetherol meist im Mittel ein bis 30, bevorzugt ein bis 20, besonders bevorzugt ein bis 10 und ganz besonders bevorzugt ein bis acht Moleküle Ethylenoxid und/oder Propylenoxid und/oder iso-Butylenoxid pro Hydroxygruppe.

Bevorzugt enthält das hyperverzweigte Polycarbonat einen Alkohol (B1), der ein tri- oder höherfunktionelles Polyetherol ist auf Basis von Alkoholen, die mindestens drei OH-Gruppen aufweisen, und $C_3$-$C_{24}$ Alkylenoxid. Geeignete Alkohole, die mindestens drei OH-Gruppen aufweisen, sind wie oben beschrieben, bevorzugt Glycerin, Trimethylolethan, Trimethylolpropan, 1,2,4-Butantriol, 1,2,3-Hexantriol, 1,2,4-Hexantriol, Pentaerythrit, besonders bevorzugt Glycerin und Trimethylolpropan. Bevorzugte $C_3$-$C_{24}$ Alkylenoxide sind unter anderem Propylenoxid, Butylenoxid, Pentylenoxid und deren Mischungen, besonders bevorzugt Propylenoxid. Die tri- oder höherfunktionellen Polyetherole enthalten meist mindestens ein bis 30, bevorzugt zwei bis 30, besonders bevorzugt drei bis 20 Moleküle $C_3$-$C_{24}$ Alkylenoxid in einpolymerisierter Form. Besonders bevorzugter Alkohol (B1) ist ein trifunktionelles Polyetherol auf Basis von Glycerin, Trimethylolethan, Trimethylolpropan, 1,2,4-Butantriol und/oder Pentaerythrit, und Propylenoxid, wobei das Polyetherol mindestens drei, bevorzugt drei bis 30, besonders bevorzugt drei bis 20 Moleküle Propylenoxid in einpolymerisierter Form enthält.

Zusätzlich zu dem Alkohol (B1) kann das Polycarbonat A1 einen difunktionellen Alkohol (B2) als Aufbaukomponente aufweisen, mit der Maßgabe, dass die mittlere OH-Funktionalität aller eingesetzten Alkohole B zusammen größer als 2 ist. Die Alkohole (B1) und (B2) werden hier zusammen als (B) bezeichnet. Geeignete difunktionelle Alkohole B2 sind unter anderem Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, 1,6-Hexandiol, 1,2-, 1,3- oder 1,4-Cyclohexandiol, 1,1-, 1,2-, 1,3- oder 1,4-Cyclo-hexandimethanol, Bis(4-Hydroxycyclohexyl)methan, difunktionelle Polyetherpolyole auf Basis Ethylenoxid, Propylenoxid, Butylenoxid oder deren Gemische, Polytetrahydrofuran mit einem Molgewicht von 162 bis 2000, Polycaprolacton oder Polyesterole auf Basis von Diolen und Dicarbonsäuren. Bevorzugter difunktioneller Alkohol (B2) sind difunktionelle Polyetherpolyole auf Basis Ethylenoxid, Propylenoxid, Butylenoxid oder deren Gemische, und Polyesterole auf Basis von Diolen und Dicarbonsäuren.

Die Diole dienen zur Feineinstellung der Eigenschaften des Polycarbonates A1. Falls difunktionelle Alkohole eingesetzt werden, wird das Verhältnis von difunktionellen Alkoholen (B2) zu den mindestens trifunktionellen Alkoholen (B1) vom Fachmann je nach den gewünschten Eigenschaften des Polycarbonates festgelegt. Im Regelfalle beträgt die Menge des oder der Alkohole (B2) 0 bis 50 mol % bezüglich der Gesamtmenge aller Alkohole (B1) und (B2) zusammen. Bevorzugt beträgt die Menge 0 bis 35 mol %, besonders bevorzugt 0 bis 25 mol % und ganz besonders bevorzugt 0 bis 10 mol %.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum

erfindungsgemäßen hochfunktionellen hochverzweigten Polycarbonat erfolgt unter Eliminierung des monofunktionellen Alkohols oder Phenols aus dem Carbonat-Molekül.

Das hyperverzweigte Polycarbonat ist nach dieser Reaktion, also ohne weitere Modifikation, hochfunktionell mit Hydroxylgruppen und mit Carbonatgruppen beziehungsweise Carbamoylchloridgruppen terminiert. Unter einem hochfunktionellen Polycarbonat ist ein Produkt zu verstehen, das neben den Carbonatgruppen, die das Polymergerüst bilden, end- oder seitenständig weiterhin mindestens drei, bevorzugt mindestens vier, mehr bevorzugt mindestens sechs funktionelle Gruppen aufweist. Bei den funktionellen Gruppen handelt es sich um Carbonatgruppen beziehungsweise Carbamoylchloridgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der Erfindung weisen zumeist nicht mehr als 500 end- oder seitenständige funktionelle Gruppen, bevorzugt nicht mehr als 100 end- oder seitenständige funktionelle Gruppen auf.

Bei der Herstellung der hochfunktionellen Polycarbonate ist es notwendig, das Verhältnis von den OH-Gruppen enthaltenden Verbindungen zu Phosgen oder Carbonat (A) so einzustellen, dass das resultierende einfachste Kondensationsprodukt (im Weiteren Kondensationsprodukt (K) genannt) im Mittel entweder i) eine Carbonat- oder Carbamoylchloridgruppe und mehr als eine OH-Gruppe oder ii) eine OH-Gruppe und mehr als eine Carbonat- oder Carbamoylchloridgruppe, bevorzugt im Mittel entweder i) eine Carbonat- oder Carbamoylchloridgruppe und mindestens zwei OH-Gruppen oder ii) eine OH-Gruppe und mindestens zwei Carbonat- oder Carbamoylchloridgruppen enthält.

Es kann ferner sinnvoll sein, zur Feineinstellung der Eigenschaften des Polycarbonates mindestens eine zweiwertige carbonylreaktive Verbindung (A1) einzusetzen. Darunter werden solche Verbindungen verstanden, die zwei Carbonat- und/oder Carboxylgruppen aufweisen. Carboxylgruppen können dabei Carbonsäuren, Carbonsäurechloride, Carbonsäureanhydride oder Carbonsäureester sein, bevorzugt Carbonsäureanhydride oder Carbonsäureester und besonders bevorzugt Carbonsäureester. Falls solche zweiwertigen Verbindungen (A1) eingesetzt werden, so wird das Verhältnis von (A1) zu den Carbonaten bzw. Phosgenen (A) vom Fachmann je nach den gewünschten Eigenschaften des Polycarbonates festgelegt. Im Regelfalle beträgt die Menge des oder der zweiwertigen Verbindung (A1) 0 bis 40 mol % bezüglich der Gesamtmenge aller Carbonate/Phosgene (A) und Verbindungen (A1) zusammen. Beispiele für Verbindungen (A1) sind Dicarbonate oder Dicarbamoylchloride von Diolen. Weitere Verbindungen (A1) sind Dicarbonsäuren und/oder Ester von Dicarbonsäuren.

Die einfachste Struktur des Kondensationsproduktes (K), dargestellt am Beispiel der Umsetzung eines Carbonats (A) mit einem Di- oder Polyalkohol (B) ergibt dabei die Anordnung $XY_m$ oder $Y_mX$, wobei X eine Carbonat- oder Carbamoylgruppe, Y eine Hydroxyl-Gruppe und m in der Regel eine ganze Zahl größer 1 bis 6, vorzugsweise größer 1 bis 4, besonders bevorzugt größer 1 bis 3 darstellt. Die reaktive Gruppe, die dabei als einzelne Gruppe resultiert, wird im Folgenden generell "fokale Gruppe" genannt.

Es können auch mehrere Kondensationsprodukte (K) zur Synthese eingesetzt werden. Hierbei können einerseits mehrere Alkohole beziehungsweise mehrere Carbonate eingesetzt werden. Weiterhin lassen sich durch die Wahl des Verhältnisses der eingesetzten Alkohole und der Carbonate bzw. der Phosgene Mischungen verschiedener Kondensationsprodukte unterschiedlicher Struktur erhalten.

Typische Reaktionsbedingungen der Umsetzung von (A) mit (B) zum Kondensationsprodukt (K) sind im Folgenden dargestellt:

> Die Stöchiometrie der Komponenten (A) und (B) wird generell so gewählt, daß das resultierende Kondensationsprodukt (K) entweder eine Carbonat- oder Carbamoylchloridgruppe und mehr als eine OH-Gruppe oder eine OH-Gruppe und mehr als eine Carbonat- oder Carbamoylchloridgruppe aufweist. Dies wird im ersten Fall erreicht durch eine Stöchiometrie von 1 mol Carbonatgruppen : >2 mol OH-Gruppen, beispielsweise eine Stöchiometrie von 1 : 2,1 bis 8, bevorzugt 1 : 2,2 bis 6, besonders bevorzugt 1 : 2,5 bis 4 und ganz besonders bevorzugt 1 : 2,8 bis 3,5. Im zweiten Fall wird dies erreicht durch eine Stöchiometrie von mehr als 1 mol Carbonatgruppen : <1 mol OH-Gruppen, beispielsweise eine Stöchiometrie von 1 : 0,1 bis 0,48, bevorzugt 1 : 0,15 bis 0,45, besonders bevorzugt 1 : 0,25 bis 0,4 und ganz besonders bevorzugt 1 : 0,28 bis 0,35.

Die Temperatur sollte ausreichend für die Umsetzung des Alkohols mit der entsprechenden Carbonylkomponente sein. In der Regel ist für die Umsetzung mit einem Phosgen eine Temperatur von -20 °C bis 120 °C, bevorzugt 0 bis 100 und besonders bevorzugt 20 bis 80 °C ausreichend. Bei Einsatz eines Carbonats sollte die Temperatur 60 bis 280 °C, bevorzugt 80 bis 250 °C, besonders bevorzugt 100 bis 250 und ganz besonders bevorzugt 120 bis 250 °C betragen.

Die Herstellung erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Als Lösungsmittel kommen aromatische und/oder (cyclo)aliphatische Kohlenwasserstoffe und deren Gemische, halogenierte Kohlenwasserstoffe, Ketone, Ester und Ether in Frage, bevorzugt Butylacetat, Dimethylformamid, Dimethylacetamid, Dimethylsulfoxid, Methoxypropylacetat, iso-Butylmethylketon, 2-Butanon, aromatische Kohlenwasserstoffe (wie Solvesso®-Marken), Cyclohexan, Chlorbenzol und Xylol. Es stellt eine bevorzugte Ausführungsform dar, die Reaktion ohne Lösungsmittel durchzuführen.

Die Reihenfolge der Zugabe der einzelnen Komponenten spielt zumeist eine untergeordnete Rolle. In der Regel ist es sinnvoll die Überschußkomponente der beiden Reaktionspartner vorzulegen und die Unterschußkomponente zuzugeben. Alternativ ist es ebenfalls möglich, die beiden Komponenten vor Reaktionsbeginn miteinander zu vermischen und diese Gemisch anschließend auf die erforderliche Reaktionstemperatur aufzuheizen.

Die einfachen Kondensationsprodukte (K) reagieren erfindungsgemäß bevorzugt sofort intermolekular weiter unter Bildung von hochfunktionellen Polykondensationsprodukten, im Folgenden Polykondensationsprodukte (P) genannt. Die Umsetzung zum Kondensationsprodukt (K) und zum Polykondensationsprodukt (P) erfolgt üblicherweise bei einer Temperatur von 0 bis 300 °C, bevorzugt 0 bis 250°C, besonders bevorzugt bei 60 bis 250°C und ganz besonders bevorzugt bei 80 bis 250°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel die oben genannten und besonders bevorzugt Decan, Dodecan, Cyclohexan, Benzol, Toluol, Chlorbenzol, Xylol, Dimethylformamid, Dimethylacetamid, Dimethylsulfoxid oder Solventnaphtha. In einer bevorzugten Ausführungsform wird die Kondensationsreaktion in Substanz durchgeführt. Der bei der Reaktion freiwerdende monofunktionelle Alkohol oder das Phenol ROH kann zur Beschleunigung der Reaktion aus dem Reaktionsgleichgewicht entfernt werden, zum Beispiel destillativ, gegebenenfalls bei vermindertem Druck.

Die Abtrennung des Alkohols oder Phenols kann auch durch Durchleiten eines unter den Reaktionsbedingungen im wesentlichen inerten Gasstromes (Strippen), wie z.B. Stickstoff, Wasserdampf, Kohlenstoffdioxid oder auch eines sauerstoffhaltigen Gases, wie z.B. Luft oder Magerluft, unterstützt werden. Falls Abdestillieren vorgesehen ist, ist es regelmäßig empfehlenwert, solche Carbonate einzusetzen, welche bei der Umsetzung Alkohole oder Phenole ROH mit einem Siedepunkt von weniger als 140°C bei dem vorliegenden Druck freisetzen. Alternativ können die freigesetzten Alkohole durch azeotrope Destillation mittels Schleppmittel (z.B. Toluol, Xylol, Chlorbenzol, Cyclohexan) oder durch Anlegen eines Vakuums entfernt und damit die Bildung des Polykondensats unterstützt werden.

Zur Beschleunigung der Reaktion können auch Katalysatoren oder Katalysatorgemische zugegeben werden. Geeignete Katalysatoren sind Verbindungen, die Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben. Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titan-tetra-butylat, Titantetraisopropylat, Dibutylzinnoxid, Dibutylzinn-dilaurat, Zinndioctoat, Zirkonacetylacetonat oder Gemische davon eingesetzt. Die Zugabe des Katalysators erfolgt im Allgemeinen in einer Menge von 50 bis 10000, bevorzugt von 100 bis 5000 Gew. ppm bezogen auf die Menge des eingesetzten Alkohols oder Alkoholgemisches. Gegebenenfalls kann es erforderlich sein, den Katalysator in geringen Mengen eines geeigneten Lösungsmittels vorzulösen.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum, beispielsweise über mindestens 6 Wochen, stabil, ohne Trübungen, Ausfällungen und/oder einen Viskositätsanstieg zu zeigen. Aufgrund der Beschaffenheit der Kondensationsprodukte (K) ist es möglich, daß aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonat- oder Carbamoylchloridgruppe als fokale Gruppe und mehr als zwei OH-Gruppen oder aber eine OH-Gruppe als fokale Gruppe und mehr als zwei Carbonat- oder Carbamoylchloridgruppen auf. Die Anzahl der reaktiven Gruppen ergibt sich dabei aus der Beschaffenheit der eingesetzten Kondensationsprodukte (K) und dem Polykondensationsgrad.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist. Dies ist in der Regel unterhalb von 60 °C, bevorzugt unter 50 °C, besonders bevorzugt unterhalb von 40 °C und ganz besonders bevorzugt bei Raumtemperatur der Fall. Weiterhin kann man den Katalysator desaktivieren, bei basischen Katalysatoren zum Beispiel durch Zugabe einer sauren Komponente, zum Beispiel einer Lewis-Säure oder einer organischen oder anorganischen Protonensäure. Ferner ist es möglich, die Reaktion durch Verdünnen mit einem vorgekühlten Lösungsmittel zu stoppen. Dies ist insbesondere dann bevorzugt, wenn man die Viskosität des Reaktionsgemischs durch Zugabe von Lösungsmittel anpassen muß.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe bzw. Carbamoylgruppe als fokaler Gruppe zum Beispiel ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden. Falls erforderlich kann das Reaktionsgemisch einer Entfärbung, beispielsweise durch Behandlung mit Aktivkohle oder Metalloxiden, unterworfen werden. Gegebenenfalls kann das Reaktionsgemisch auch zur Entfernung von eventuell vorhandenen Ausfällungen filtriert werden. In einer weiteren bevorzugten Ausführungsform wird das Produkt gestrippt, das heißt von niedermolekularen, flüchtigen Verbindungen befreit. Dazu kann nach Erreichen des gewünschten Umsatzgrades der Katalysator optional desaktiviert und die niedermolekularen flüchtigen Bestandteile, zum Beispiel Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

Die hyperverzweigten Polycarbonate, die wie vorstehend beschrieben erhältlich sind, weisen in der Regel eine Glasübergangstemperatur von weniger als 50 °C, bevorzugt weniger als 30 und besonders bevorzugt weniger als 10 °C auf. Die OH-Zahl beträgt meist 30 mg KOH/g oder mehr, bevorzugt zwischen 50 und 250 mg/g. Das gewichtsmittlere Molgewicht $M_w$ liegt zumeist zwischen 1.000 und 150.000, bevorzugt von 1500 bis 100.000 g/mol, das zahlenmittlere Molgewicht $M_n$ zwischen 500 und 50.000, bevorzugt zwischen 1.000 und 40.000 g/mol. Das hyperververzweigte Polycarbonat ist meist nicht löslich oder dispergierbar in Wasser, das heißt, dass es nicht möglich ist eine klare (d.h. ohne Partikel, die mit dem blossen Auge erkennbar sind) wässrige Lösung oder Dispersion herzustellen.

Bevorzugt ist ein hyperverzweigtes Polycarbonat A1, das verknüpft ist mit mindestens einem linearen oder Kamm-förmigen Polymer. Das Molverhältnis von hyperverzweigtem Polycarbonat zur Summe aus linearem oder Kamm-förmigem Polymer und aus funktionaler $C_1$-$C_{24}$-Einheit liegt meist im Bereich von 1 : 1 bis 1 : 100, bevorzugt 1 : 1 bis 1 : 50, besonders bevorzugt 1 : 1 bis 1 : 25. Die Verknüpfung erfolgt üblicherweise mittels eines Linkers.

Bevorzugt ist das lineare Polymer

a) ein Homopolymer oder statistisches Copolymer enthaltend ein polares, ethylenisch ungesättigtes Monomer,
b) ein Blockpolymer enthaltend einen Block aus Polyethylenglykol oder auf Basis mindestens eines polaren, ethylenisch ungesättigten Monomers, oder
c) ein Polykondensat enthaltend Polyethylenglykol, oder
d) ein Polyethylenglykol,

wobei das Polyethylenglykol d) über einen Linker mit dem Polycarbonat verknüpft ist. Besonders bevorzugt ist das lineare Polymer eines der vorgenannten Polymere a), b) oder c). In einer weiteren besonders bevorzugten Ausführungsform ist das lineare Polymer eines der vorgenannten Polymere a), c) oder d). Speziell bevorzugt ist das lineare Polymer eines der vorgenannten Polymere a) oder c), insbesondere a).

Das lineare Polymer kann in einer Ausführungsform ein Homopolymer oder statistisches Copolymer enthaltend ein polares, ethylenisch ungesättigtes Monomer sein. Die zahlenmittlere Molmasse Mn liegt meist unter 100000 g/mol, bevorzugt unter 50.000 g/mol, besonders bevorzugt unter 20.000 g/mol und ganz besonders bevorzugt unter 10.000 g/mol und kann durch GPC und einem geeigneten Standard ermittelt werden. Mn liegt üblicherweise über 200 g/mol, bevorzugt über 500 g/mol.

Geeignete polare, ethylenisch ungesättigte Monomere sind Ladung tragende oder ionisierbare Gruppen tragende Monomere, die eine polymerisierbare, ethylenisch ungesättigte Bindung enthalten. Beispiele für Ladung tragende oder ionisierbare Gruppen sind Carbonsäure, Sulfonsäure, Polyethylenglykol, Alkohol, Nitril, Amid, Amin, Dialkylamin. Beispiele für polare, ethylenisch ungesättigte Monomere sind Vinylpyrrolidon, (Meth)Acrylsäure, ein Sulfonsäure-haltiges (Meth)Acrylat (wie Acrylamido-2-methyl-propansulfonsäure), ein Amino-funktionelles (Meth)Acrylat (wie Dimethylaminoethyl(meth)acrylat), (Meth)Acrylsäureester von einem Polyethylenglykolderivat (wie Polyethylenglykolmonomethylether(meth)acrylat), Itaconsäure, Maleinsäureanhydrid, OH-Gruppen substituierte $C_1$-$C_{20}$-Alkyl(meth)acrylate (wie Hydroxylethyl(meth)acrylat, Hydroxybutyl(meth)acrylat), (Meth)Acrylnitril, (Meth)Acrylamid, N-Methylol(meth)-acrylamid. Bevorzugte polare, ethylenisch ungesättigte Monomere sind Vinylpyrrolidon, (Meth)Acrylsäure, Polyethylenglykolmonomethylether(meth)acrylat, Polyethylenglykol(meth)acrylat. Der Ausdruck "(Meth)Acryl" bedeutet "Acryl" oder "Methacryl".

Beispiele für lineare Homopolymere enthaltend ein polares, ethylenisch ungesättigtes Monomer sind Homopolymere der vorgenannten polaren, ethylenisch ungesättigten Monomere, bevorzugt von Vinylpyrrolidon, (Meth)Acrylsäure, Polyethylenglykolmonomethylether(meth)acrylat, Polyethylenglykol(meth)acrylat.

Beispiele für statistische Copolymere enthaltend ein polares, ethylenisch ungesättigtes Monomer sind Copolymere der vorgenannten polaren, ethylenisch ungesättigten Monomere, bevorzugt von Vinylpyrrolidon, (Meth)Acrylsäure, Polyethylenglykolmonomethylether(meth)acrylat, Polyethylenglykol(meth)acrylat. Als weiteres Monomer kann das statistische Copolymer enthalten: Ester der Acrylsäure mit $C_1$-$C_{10}$-Alkanolen wie Ethylacrylat, n-Butylacrylat, Isobutylacry-lat, tert.-Butylacrylat, n-Hexylacrylat, 2-Ethylhexylacrylat und 3-Propylheptylacrylat, die Ester der Methacrylsäure mit $C_1$-$C_{10}$-Alkanolen w i e Methylmethacrylat, Ethylmethacrylat, n-Butylmethacrylat, Isobutylmethacrylat, tert.-Butylmethacrylat und n-Hexylmethacrylat, N-($C_2$-$C_{10}$-Alkyl)amide der Acrylsäure und der Methacrylsäure sowie die N-($C_1$-$C_2$-Alkyl)-N-($C_2$-$C_{10}$-alkyl)amide der Acrylsäure und der Methacrylsäure, z. B. N-Ethylacrylamid, N,N-Diethylacrylamid, N-Butylacrylamid, N-Methyl-N-propylacrylamid, N-(n-Hexyl)acrylamid, N-(n-Octyl)acrylamid und die entsprechenden Methacrylamide, vinylaromatische Monomere wie Styrol, Methylstryrol, Vinyltoluol, Olefine mit 2 bis 10 C-Atomen, vorzugsweise $\alpha$-Olefine mit 3 bis 10 C-Atomen wie Propen, 1-Buten, 1-Penten, 1-Hexen, 1-Octen und 1-Decen, Vinylester aliphatischer Carbonsäuren wie Vinylacetat, Vinylpropionat, Vinyllaurat, Vinylnonanoat, Vinyldecanoat, Vinyllaurat und Vinylstearat, ungesättigte Nitrile wie Acrylnitril und Methacrylnitril, halogenierte Olefine wie Vinylchlorid, $C_{11}$-$C_{20}$-Alkylester monoethylenisch ungesättigter Monocarbonsäuren mit vorzugsweise 3 bis 6 C-Atomen, z. B. $C_{11}$-$C_{20}$-Alkylacrylate und $C_{11}$-$C_{20}$-Alkylmethacrylate wie Laurylacrylat, Laurylmethacry-lat, Isotridecylacrylat, Isotridecylmethacrylat, Stearylacrylat, Stearylmethacrylat, Di-$C_1$-$C_{20}$-Alkylester ethylenisch ungesättigter Dicarbonsäuren mit vorzugsweise 4 bis 8 C-Atomen, z. B. Di-$C_1$-$C_{20}$-Alkylester der Fumarsäure und der Maleinsäure wie Di-methylfumarat, Dimethylmaleat, Dibutylfumarat und Dibutylmaleat, Glycidylester mo-noethylenisch ungesättigter Monocarbonsäuren mit vorzugsweise 3 bis 6 C-Atomen, wie Glycidylacrylat und Glycidylmethacrylat. Bevorzugte weitere Monomere sind die Ester mit $C_1$-$C_{10}$-Alkanolen der Acrylsäure und der Methacrylsäure.

Das lineare Polymer kann in einer weiteren Ausführungsform ein Blockpolymer enthaltend einen Block aus Polyethylenglykol oder aus mindestens einem polaren, ethylenisch ungesättigten Monomer sein. Die Molmasse Mn liegt meist im Bereich von 200-10.000 g/mol, bevorzugt zwischen 300 und 2000 g/mol, und kann durch GPC ermittelt werden. Das Blockpolymer kann vom A-B oder A-B-A, bevorzugt A-B Typ sein. Die Herstellung von Blockpolymeren dieser Typen ist allgemein bekannt. Geeignete und bevorzugte polare, ethylenisch ungesättigte Monomere sind wie oben genannt. Beispiele für einen Block aus Polyethylenglykol sind Polyethylenglykol oder Polyethylenglykolmonoalkylether mit einer Molmasse Mn von 200 bis 10000 g/mol. Beispiele für einen Block aus mindestens einem polaren, ethylenisch ungesättigten Monomer sind Polyvinylpyrrolidon oder Poly(meth)acrylsäure oder Polyethylenglykolmonomethylether(meth)acrylat. Der jeweils andere Block kann aus Polymerblöcken aus dem Stand der Technik aufgebaut sein. Bevorzugt ist der andere Block unpolar, beispielsweise ist er aus Caprolacton oder Propylenoxid aufgebaut. In einer weiteren Ausführungsform enthält der andere Block Polyester (z.B. basierend auf einer Dicarbonsäure und einem Diol), Polyamid (z.B. basierend auf einer Dicarbonsäure und einem Diamin), Polycarbonat, Polyurethan oder Polyharnstoff. Bevorzugte Blockpolymere sind Polyethylenglykol-block-polycaprolacton und Polyethylenglykolmonomethylether-block-polycaprolacton und Polyproyplenglykol-block-Polyethylenglykol.

Das lineare Polymer kann in einer weiteren Ausführungsform ein Polykondensat enthaltend Polyethylenglykol sein. Der Begriff Polykondensat schließt im Sinne der vorliegenden Erfindung auch Polyadditionsprodukte ein. Beispiele für Polyethylenglykol sind Polyethylenglykol oder Polyethylenglykolmonoalkylether mit einer Molmasse Mn von 200 bis 10000 g/mol. Beispiele für Polykondensate sind Polyether, Polyamide, Polyimide, Polyester, Polycarbonate, Polyurethane und Polyharnstoffe, bevorzugt Polyether und Polyester. Bevorzugtes Polykondensat ist ein Polyether basierend auf $C_3$-$C_{24}$ Alkylenoxid, besonders Propylenoxid, und ein Polyester auf Basis von Hydroxycarbonsäureverbindungen, Dialkoholverbindungen oder Disäureverbindungen, besonders Hydroxycarbonsäureverbindungen. Bevorzugte Hydroxycarbonsäureverbindungen sind Lactone, insbesondere $C_4$ bis $C_{18}$-Alkyllactone, ganz besonders bevorzugt $\varepsilon$-Caprolacton.

Das lineare Polymer kann in einer weiteren Ausführungsform ein Polyethylenglykol sein, wobei das Polyethylenglykol über einen Linker mit dem Polycarbonat verknüpft ist. Bevorzugt ist der Linker ein Polyisocyanat. Beispiele für Polyethylenglykol sind Polyethylenglykol oder Polyethylenglykolmonoalkylether mit einer Molmasse Mn von 200 bis 10000 g/mol, bevorzugt 300-2000 g/mol. Bevorzugt handelt es sich bei dem Polyethylenglykol um ein Polyethylenglykolmono-$C_1$-$C_{18}$-alkylether, insbesondere um ein ein Polyethylenglykolmonomethylether.

Unter Kamm-förmigen Polymeren werden hier Kammpolymere verstanden, die üblicherweise an einer linearen Hauptkette in mehr oder weniger regelmäßigen Abständen längere, untereinander nahezu gleichlange Seitenketten, bevorzugt aliphatische Seitenketten, enthalten. Die Molmasse Mn liegt meist im Bereich von 500 bis 100000 g/mol und kann durch GPC ermittelt werden. Das Kamm-förmige Polymer enthält bevorzugt Polyalkylenglykol-mono(meth)acrylat oder Allylalkoholalkoxylat (wie Polyethylenglykol-allylether,) in polymerisierter Form, bevorzugt Polyethylenglykolmonoalkylether(meth)acrylat mit einer Molmasse Mn von 100 bis 5000 g/mol. Besonders bevorzugt enthält das Kammpolymer Polyethylenglykolmonomethylether-acrylat oder Polyethylenglykolmonomethylether-methacrylat mit einer Molmasse Mn von jeweils 100 bis 3000 g/mol, bevorzugt 200 bis 1500 g/mol. Das Kammpolymer kann zusätzlich zu Polyalkylenglykol-mono(meth)acrylat oder Allylalkoholalkoxylate beliebige copolymerisierbare ethylenisch ungesättigte Monomere enthalten. Bevorzugte zusätzliche Monomere sind unpolare Monomere und/oder vorgenannte polare, ethylenisch ungesättigte Monomere. Bevorzugte unpolare Monomere sind $C_1$-$C_{20}$-Alkyl(meth)acrylate oder Vinylaromaten mit bis zu 20 C-Atomen. Beispiele umfassen Methyl(meth)acrylat, Ethyl(meth)acrylat, n-Butyl(meth)acrylat, 2-Ethylhexyl-(meth)acrylat, Lauryl(meth)acrylat oder 4-t-Butyl-cyclohexyl(meth)acrylat. Als vinylaromatische Verbindungen kommen z.B. Vinyltoluol, $\alpha$-Butylstyrol, 4-n-Butylstyrol, 4-n-Decylstyrol oder Styrol in Betracht. Bevorzugte zusätzliche Monomere sind Methy(meth)acrylat, Laurylacrylat, Stearylacrylat, Styrol, Vinylpyrrolidon oder deren Mischungen.

Das lineare oder Kamm-förmige Polymer kann nach allgemein bekannten Verfahren hergestellt werden (beispielsweise aus US 5,556,918 und EP-A 742 238). In einer Ausführungsform wird das lineare Polymer, das ein Homopolymer oder statistisches Copolymer ist enthaltend ein polares, ethylenisch ungesättigtes Monomer, das Blockpolymer enthaltend einen Block aus Polyethylenglykol oder auf Basis mindestens eines polaren, ethylenisch ungesättigten Monomer, sowie das Kammpolymer durch radikalisch initiierte Lösungspolymerisation der Monomere in Gegenwart eines Initiators und gegebenenfalls eines Reglers hergestellt. Bevorzugt wird dabei ein Initiator verwendet, der beim Zerfall ein Hydroxyl-Radikal (OH-Radikal) bildet und/oder ein Regler der eine OH-Gruppe oder eine $NH_2$-Gruppe enthält. Diese OH- oder $NH_2$-Gruppen können später als Linker-reaktive Gruppe verwendet werden.

Geeignete Initiatoren sind organische Hydroperoxide wie tert.-Butylhydroperoxid, Tetrahydrofuranhydroperoxid, Cumolhydroperoxid oder 2,2'-Azobis(2-methyl-N-(2-hydroxyethyl)propionamid). Geeignete Regler sind Aminoalkohole, Aminophenole und insbesondere Thioalkanole wie 3-Hydroxypropanthiol, 3-Mercapto-1,2-propandiol, 2-Hydroxyethyl-3-mercaptopropionsäureester und vor allem 2-Hydroxyethanthiol (Mercaptoethanol). Sofern ein derartiger Regler eingesetzt wird, kann die Polymerisation auch in Gegenwart eines konventionellen Initiators durchgeführt werden, beispielsweise eines konventionellen Azostarters oder eines organischen Peroxids wie Azobis-(isobutyronitril), Di-(tert.-butyl)peroxid, Didecanoylperoxid, Dibenzoylperoxid, Peressigsäure-tert.-butylester oder 2-Methylperpropionsäure-tert.-butylester. Sofern man die Polymerisation in Gegenwart eines der vorgenannten Regler durchführt, wird man den Regler in der Regel in einer Menge von 0,1 bis 12 Gew.-%, häufig 0,2 bis 8 Gew.-% und insbesondere 0,5 bis 5 Gew.-%, bezogen auf die Gesamtmenge der Monomere einsetzen. Initiatoren werden in der Regel in einer Menge von 0,05 bis 5 Gew.-%, häufig 0,1 bis 4 Gew.-% und besonders bevorzugt in einer Menge von 0,2 bis 3 Gew.-%, bezogen auf die zu polymerisierenden Monomere eingesetzt. Wegen weiterer Details wird insbesondere auf die Seite 3 der EP 742 238 verwiesen, auf deren Offenbarung Bezug genommen wird.

In einer weiteren bevorzugten Ausführungsform ist das hyperverzweigte Polycarbonat A1 verknüpft mit mindestens einer funktionalen $C_1$-$C_{24}$-Einheit enthaltend eine Säuregruppe, eine Aminogruppe oder mindestens zwei Hydroxygruppen. Bevorzugt enthält die funktionale $C_1$-$C_{24}$-Einheit eine Carbonsäuregruppe, eine Sulfonsäuregruppe, eine Sulfensäuregruppe, eine Sulfinsäuregruppe, eine Schwefelsäureestergruppe (d.h. ein organisches Sulfat), eine Phosphonsäuregruppe, eine Aminogruppe oder mindestens zwei Hydroxy-$C_2$-$C_{10}$-alkylgruppen, besonders bevorzugt eine Carbonsäuregruppe. Optional kann die funktionale $C_1$-$C_{24}$ Einheit auch mehrere der aufgeführten Gruppen zugleich enthalten.

In einer Ausführungsform enthält die funktionale $C_1$-$C_{24}$-Einheit zusätzlich eine Verknüpfungsgruppe mit der die funktionalen $C_1$-$C_{24}$-Einheit an das hyperverzweigte Polycarbonat direkt oder mittels eines Linkers kovalent verknüpft werden kann. Geeignete Verküpfungsgruppen können mit den OH- und/oder Carbonat- oder CarbamoylchloridGruppen des Polycarbonats reagieren. Beispiele sind Carbonsäuren, Carbonsäureester, Carbonsäureanhydride, Isocyanate, Amine, und Alkohole. Weitere geeignete Verküpfungsgruppen können mit dem Linker reagieren. Beispiele sind Alkohole oder Amine, bevorzugt Alkohole. Geeignete Linker werden nachfolgend beschrieben.

Das hyperverzweigte Polycarbonat, das verknüpft ist mit der funktionalen $C_1$-$C_{24}$-Einheit, wird bevorzugt erhalten durch Umsetzung des hyperverzweigten Polycarbonats mit einem Funktionalisierungsreagenz, das die funktionale $C_1$-$C_{24}$-Einheit enthaltend eine Säuregruppe, eine Aminogruppe oder mindestens zwei Hydroxygruppen und die Verküpfungsgruppe umfasst, und optional mit einem Linker.

Geeignete Funktionalisierungsreagenzien zur direkten kovalenten Verknüpfung ohne Linker sind Anhydride. Besonders geeignet sind zyklische Carbonsäureanhydride, wie Bernsteinsäureanhydrid oder Phthalsäureanhydrid, insbesondere Bernsteinsäureanhydrid. Typischerweise werden die Anhydride mit dem hyperverzweigten Polycarbonat unter erhöhten Temperaturen, meist bei 80 bis 200 °C, umgesetzt. Die Umsetzung kann mit oder ohne Zusatz von Lösungsmitteln erfolgen. Eine weitere Aufreinigung ist normalerweise nicht nötig.

Geeignete Funktionalisierungsreagenzien zur kovalenten Verknüpfung mittels Linker sind Hydroxycarbonsäuren, Aminocarbonsäuren, Hydroxysulfonsäuren, Hydroxysulfate, Aminosulfonsäuren oder Aminosulfate, Hydroxyamine (wie Diethanolamin), Polyamine (z.B. Diethylentetramin) oder Polyole (z.B. Glycerin, Trimethylolpropan, Pentaerythrit). Bevorzugte Linker hierfür sind nachstehend beschriebene Polyisocyanate, bevorzugt Diisocyanate, besonders bevorzugt aliphatische Diisocyanate (wie Hexamethylendiisocyanat und Isophorondiisocyanat).

Die Verknüpfung der linearen oder Kamm-förmigen Polymere mit dem hyperverzweigten Polycarbonat gelingt bevorzugt mit Hilfe eines Linkers. Meist wird dabei zunächst der Linker mit dem linearen oder Kamm-förmigen Polymer kovalent verbunden, um anschließend das Linker-haltige Polymer an das hyperverzweigte Polycarbonat anzukuppeln. Damit das Linker-haltige Polymer hergestellt werden kann, enthält das Ausgangspolymer meist eine Gruppe, die mit

dem Linker reagieren kann (Linker-reaktive Gruppe). Die mittlere Anzahl der Linker-reaktiven Gruppen beträgt in der Regel nicht mehr als zwei und liegt vorzugsweise im Bereich von 0,3 bis 1,8, insbesondere im Bereich von 0,5 bis 1,5 und speziell im Bereich von 0,6 bis 1,4 pro Polymermolekül. Die Linker-reaktive Gruppe kann in der Polymerkette angeordnet sein oder befindet sich vorzugsweise am Ende der Polymerkette.

Im Falle eines linearen Polymers, das ein Homopolymer oder statistisches Copolymer ist, enthaltend ein polares, ethylenisch ungesättigtes Monomer, ein Blockpolymer enthaltend einen Block aus Polyethylenglykol oder auf Basis mindestens eines polaren, ethylenisch ungesättigten Monomers, oder eines Kammpolymers kann die Linker-reaktive Gruppe wie vorbeschrieben über einen geeigneten Initiator und/oder Regler eingeführt werden. Alternativ kann die Linker-reaktive Gruppe über eine kontrollierte radikalische Reaktion nach dem Stand der Technik (wie Atom Transfer Radical Polymerization (ATRP), Reversible Addition Fragmentation Chain Transfer Polymerization(RAFT), oder Nitroxide Mediated Polymerization (NMP)) gezielt am Kettenende eingeführt werden. Ebenso ist es möglich, dass eine funktionelle Gruppe in der Polymerkette als Linker-reaktive Gruppe verwendet wird, beispielsweise eine von gegebenenfalls mehreren OH-Gruppen eines einpolymerisierten Hydroxyethyl(meth)acrylats.

Im Falle eines Polykondensats enthaltend Polyethylenglykol kann eine Linker-reaktive Gruppe am Kettenende des Polykondensats erzeugt werden durch eine geeignete Stöchiometrie und Einsatz eines monofunktionellen Monomers. Bevorzugt wird die Linker-reaktive Gruppe durch ring-öffnende Polymerisation eines Lactons erzeugt, so dass genau eine funktionelle Hydroxygruppe am Kettenende entsteht.

Im Falle eines Polyethylenglykols kann als Linker-reaktive Gruppe eine HydroxyGruppe am Kettenende verwendet werden. Bevorzugt werden Polyethylenglykolmonoalkylether, die genau eine Linker-reaktive Gruppe am Kettenende haben.

Allgemein kommen als Linker reaktive polyfunktionelle Verbindungen in Betracht mit mindestens zwei reaktiven Gruppen. Bevorzugte Linker sind Polyisocyanate mit einer Funktionalität bezüglich der Isocyanatgruppen von wenigstens 1,5, insbesondere 1,5 bis 4,5 und speziell 1,8 bis 3,5, und umfassen aliphatische, cycloaliphatische und aromatische Di- und Polyisocyanate sowie die Isocyanurate, Allophanate, Urethdione und Biurete von aliphatischen, cycloaliphatischen und aromatischen Diisocyanaten. Vorzugsweise weisen die Polyisocyanate im Mittel 1,8 bis 3,5 Isocyanatgruppen pro Molekül auf. Beispiele für geeignete Polyisocyanate sind aromatische Diisocyanate wie Toluol-2,4-diisocyanat, Toluol-2,6-diisocyanat, kommerziell erhältliche Mischungen von Toluol-2,4- und -2,6-diisocyanat (TDI), n-Phenylendiisocyanat, 3,3'-Diphenyl-4,4'-biphenylendiisocyanat, 4,4'-Biphenylendiisocyanat, 4,4'-Diphenylmethandiisocyanat, 2,4'-Diphenylmethandiisocyanat, 3,3'-Dichlor-4,4'-biphenylendiisocyanat, Cumen-2,4-diisocyanat, 1,5-Naphthalindiisocyanat, p-Xylylendiisocyanat, p-Phenylendiisocyanat, 4-Methoxy-1,3-phenylendiisocyanat, 4-Chlor-1,3-phenylendiisocyanat, 4-Ethoxy-1,3-phenylendiisocyanat, 2,4-Dimethylen-1,3-phenylendiisocyanat, 5,6-Dimethyl-1,3-phenylendiisocyanat, 2,4-Diisocyanatodiphenylether, aliphatische Diisocyanate wie Ethylendiisocyanat, Ethylidendiisocyanat, Propylen-1,2-diisocyanat, 1,6-Hexamethylendiisocyanat (HDI), 1,4-Tetramethylendiisocyanat, 1,10-Decamethylendiisocyanat und cycloaliphatische Diisocyanate, wie Isophorondiisocyanat (IPDI), Cyclohexylen-1,2-diisocyanat, Cyclohexylen-1,4-diisocyanat und Bis(4,4'-Isocyanatocyclohexyl)methan. Unter den Polyisocyanaten sind solche bevorzugt, deren Isocyanatgruppen sich in ihrer Reaktivität unterscheiden, wie Toluol-2,4-diisocyanat, Toluol-2,6-diisocyanat, 2,4'-Diphenylmethandiisocyanat, cis- und trans-Isophorondiisocyanat, oder Mischungen dieser Verbindungen.

Die Umsetzung mit dem Polyisocyanat erfolgt in Schmelze oder in einem organischen Lösungsmittel, bevorzugt in einem aprotisch-polaren organischen Lösungsmitteln oder Gemischen solcher Lösungsmittel. Beispiele sind Ketone (beispielsweise Aceton), Butylacetat, Tetrahydrofuran (THF), Xylol, Chlorbenzol, Dimethylsulfoxid (DMSO) oder Dimethylformamid (DMF). Bevorzugte Lösungsmittel sind Butylacetat, Xylol und Aceton. Die Umsetzung erfolgt üblicherweise bei erhöhten Temperaturen, wobei sich die-Temperatur auch nach der Siedetemperatur des gewählten Lösungsmittels richtet. Die Umsetzung des Polyisocyanats mit der ersten Komponente kann bei 20 bis 80 °C, gewünschtenfalls aber auch bis 100 °C erfolgen. Die Umsetzung der weiteren Isocyanatgruppe kann bei Temperaturen von 50 bis 100 °C erfolgen.

Die Umsetzung kann äquimolar erfolgen, was bedeutet, dass das Mengenverhältnis so gewählt wird, dass pro Mol umzusetzender Hydroxyl-Gruppe des Funktionalisierungsreagenz oder des linearen oder des kammartigen Polymers 1 Mol Diisocyanat eingesetzt wird. Bevorzugt wird mit leichtem (z.B. 0 bis 15 mol%) Überschuss der Hydroxyl-Gruppen gearbeitet, um die Menge an nicht umgesetztem Diisocyanat zu verringern. Ist das radikalische Copolymer über einen Initiator oder Regler OH-funktionalisiert, wird das Diisocyanat äquimolar oder im leichten Unterschuss zu den darüber eingeführten OH Gruppen umgesetzt. Im Falle symmetrischer Diisocyanate (wie HDI) kann es sich auch empfehlen, einen Überschuss an Diisocyanat einzusetzen und den Überschuss anschliessend destillativ zu entfernen.

Vorzugsweise wird die Umsetzung in Gegenwart eines Katalysators durchgeführt. Als Katalysatoren eignen sich beispielsweise tertiäre Amine, z. B. Triethylamin, Tri-n-propylamin, N-Methylpyrrolidin, N-Methylpiperidin und Diazabicyclooctan (DABCO), Zink-Carboxylate, Wismut-Carboxylate, Titan-Alkoholate, zinnorganische Verbindungen, insbesondere Dialkylzinn(IV)salze von aliphatischen Carbonsäuren wie Dibutylzinndilaurat und Dibutylzinndioctoat, Zinn(II)dialkanoate wie Zinndioctoat, sowie Cäsiumsalze wie Cäsiumacetat. In einer Ausführungsform sind Zink-Carboxylate, Wismut-Carboxylate, Titan-Alkoholate besonders geeignet, wobei die Carboxylate bevorzugt $C_1$-$C_{20}$ Carboxy-

late (wie Formiat, Acetat, Propionat, Hexanoat, Octanoat oder Neodecanoat) sind. Der Katalysator kann in Mengen von 50 bis 50000 ppm, vorzugsweise 100 bis 5000 ppm, bezogen auf gesamten Feststoff, eingesetzt werden.

Die Umsetzung wird üblicherweise bei erhöhten Temperaturen im Bereich von 40 bis 120 °C durchgeführt. Welche Temperatur im Einzelnen gewählt wird, hängt von der Art des verwendeten organischen Lösungsmittels ab. Das Lösungsmittel kann anschliessend durch Destillation entfernt werden.

Üblicherweise wird man die Umsetzung so durchführen, dass zunächst die Komponente, die Isocyanatgruppenfunktionalisiert werden soll (beispielweise das lineare oder Kamm-förmige Polymer oder die funktionale $C_1$-$C_{24}$-Einheit), mit dem Diisocyanat in Gegenwart des Katalysators und eines Lösungsmittels solange umgesetzt wird, bis der Isocyanat-Wert im Reaktionsgemisch auf die Hälfte gesunken ist. Bei Verwendung eines leichten Hydroxygruppen-Überschusses wird solange umgesetzt, bis der theoretische Endwert dem vollständigen Umsatz der Hydroxygruppen-Gruppen entspricht. Dies lässt sich auf bekannte Weise beispielsweise titrimetrisch ermitteln. Danach erfolgt dann die Zugabe der anderen Komponente (beispielsweise hyperverzweigtes Polycarbonat). Das molare Verhältnis von hyperverzweigtem Polycarbonat zu linearem Polymer, Kamm-förmigem Polymer oder zur funktionalen $C_1$-$C_{24}$-Einheit liegt dabei bei 1 : 1 bis 1 : 25, bevorzugt bei 1 : 2 bis 1 : 15. Die Reaktion wird fortgeführt, bis der Isocyanatwert auf Null gesunken ist.

Gruppe B1

Vinylpyrrolidon-Copolymere B1 und deren Herstellung sind in der WO 99/27916, der WO 2007/017452 und der WO 2008/064990 beschrieben.

Gegebenenfalls können die Copolymere B1 0 bis 39 Gew.-%, bevorzugt 0 bis 10 Gew.-% mindestens eines weiteren radikalisch copolymerisierbaren Monomeren B3) enthalten, wobei sich die Gew.-% Angaben der Einzelkomponenten a) bis c) zu 100 Gew.-% addieren.

Bevorzugt als Monomer B1-1 ist 1-Vinylpyrrolidon.

Der Anteil des Monomeren B1-1 im Copolymeren liegt bevorzugt im Bereich von 70 bis 95 Gew.-%, besonders bevorzugt im Bereich von 75 bis 90 Gew.-%.

Als Monomere B1-2 kommen in Betracht:

N-$C_8$-$C_{30}$-Alkyl oder N,N-$C_8$-$C_{30}$-Dialkyl-substituierte Amide von monoethylenisch ungesättigten $C_3$-$C_8$-Carbonsäuren, wobei es sich bei den Alkylresten um geradkettige oder verzweigte aliphatische oder cycloaliphatische Alkylreste mit 8 bis 30, bevorzugt 8 bis 18 Kohlenstoffatomen handelt. Unter den monoethylenisch ungesättigten Carbonsäuren mit 3 bis 8 C-Atomen kommen hierbei beispielsweise Acrylsäure, Methacrylsäure, Dimethacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure in Betracht, bevorzugt Acrylsäure, Methacrylsäure, Maleinsäure oder Mischungen der genannten Carbonsäuren.

Bevorzugte amidierte Comonomere sind beispielsweise N-Stearylacrylamid, N-Stearylmethacrylamid, N-(1-Methyl)undecylacrylamid, N-(1-Methyl)undecylmethacrylamid, N-Dodecylacrylamid, N-Dodecylmethacrylamid, N-Octylacrylamid, N-Octylmethacrylamid, N,N-Dioctylacrylamid, N,N-Dioctylmethacrylamid, N-Cetylacrylamid, N-Cetylmethacrylamid, N-Myristylacrylamid, N-Myristylmethacrylamid, N-(2-Ethyl)-hexylacrylamid, N-(2-Ethyl)-hexylmethacrylamid.

Im Falle von Maleinsäureanhydrid als Comonomer kann diese polymeranalog mit N-Alkylaminen durch Ringöffnung zu den entsprechenden Amiden umgesetzt werden.

Als weitere Comonomere B1-2 können monoethylenisch ungesättigte $C_3$-$C_8$-Carbonsäureester mit einem $C_8$-$C_{30}$-Alkohol, bevorzugt einem $C_8$-$C_{18}$-Alkohol, eingesetzt werden.

Besondere Bedeutung kommt hierbei den Acryl- bzw. Methacrylsäureestem mit Fettalkoholen einer Kettenlänge von 8 bis 18 Kohlenstoffatomen, wobei die Alkylreste verzweigt oder unverzweigt sein können, zu.

Insbesondere seien genannt: Octylacrylat, 2-Ethylhexylacrylat, Nonylacrylat, Decylacrylat, Laurylacrylat, Myristylacrylat, Cetylacrylat, Stearylacrylat, Oleylacrylat, Behenylacrylat, Octylmethacrylat, 2-Ethylhexylmethacrylat, Nonylmethacrylat, Decylmethacrylat, Laurylmethacrylat, Myristylmethacrylat, Cetylmethacrylat, Stearylmethacrylat, O-leylmethacrylat, Behenylmethacrylat, tert.-Butylcyclohexylacrylat.

Als weitere Komponente B1-2 können Vinylester langkettiger aliphatischer, gesättigter oder ungesättigter, unverzweigter $C_8$-$C_{30}$-Carbonsäuren, wie Caprylsäure, Caprinsäure, Neodecansäure (2,2,3,5-Tetramethylhexansäure), Laurinsäure, Myristinsäure, Palmitinsäure, Stearinsäure, Arachinsäure, Behensäure, Lignocerinsäure, Cerotinsäure sowie Melissensäure eingesetzt werden.

Ferner können als Monomere B1-2 $C_8$-$C_{30}$-Alkyl-Vinylether, bevorzugt $C_8$-$C_{18}$-AlkylVinylether einpolymerisiert werden. Als bevorzugte Alkylreste der Vinylether seien verzweigte oder unverzweigte $C_8$-$C_{18}$-Alkylketten wie z.B. n-Octyl, 2-Ethylhexyl, n-Nonyl, n-Decyl, n-Undecyl, n-Dodecyl, n-Tridecyl, n-Tetradecyl, n-Pentadecyl, n-Hexadecyl, n-Heptadecyl sowie n-Octadecyl genannt.

Besonders bevorzugte Monomere B1-2 sind Laurylacrylat, Myristylacrylat und Neodecansäurevinylester.
Der Anteil der Monomeren b) beträgt bevorzugt 1 bis 25, ganz besonders bevorzugt 5 bis 15 Gew.-%.
Als zusätzliche radikalisch copolymerisierbare Monomere B1-3 kommen in Betracht:

Monoethylenisch ungesättigte Carbon- und Sulfonsäuren mit 3 bis 8 C-Atomen oder deren Salze, wie Acrylsäure, Methacrylsäure, Dimethacrylsäure, Ethacrylsäure, Maleinsäure, Citraconsäure, Methylenmalonsäure, Allylessigsäure, Crotonsäure, Fumarsäure, Mesaconsäure und Itaconsäure, sowie Acrylamido-2-methyl-1-propansulfonsäure (AMPS).

Aus dieser Gruppe von Monomeren werden bevorzugt Acrylsäure, Methacrylsäure, AMPS oder Mischungen der genannten Säuren verwendet.
Die monoethylenisch ungesättigten Säuren können als freie Säure, als Anhydride sowie in partiell oder vollständig neutralisierter Form bei der Copolymerisation eingesetzt werden. Dabei sind Natrium und Ammoniumsalze bevorzugt.
Bevorzugte Copolymere B1 enthalten mindestens ein weiteres copolymerisierbares Monomer B1-3, bevorzugt in einem Anteil von bis zu 10 Gew.-% (bezogen auf das gesamte Copolymer).
Weiterhin bevorzugte Copolymere B1 enthalten 1 bis 40 Gew.-% der Komponente B1-2.
Weiterhin bevorzugte Copolymere B1 enthalten Laurylacrylat und/oder Myristylacrylat als Komponente B1-2, insbesondere Vinylpyrrolidon als Komponente B1-1 und Laurylacrylat und/oder Myristylacrylat als Komponente B1-2.
Weiterhin bevorzugte Vinylpyrrolidon-Copolymere B1 enthalten Neodecansäurevinylester als Komponente B1-2, insbesondere Vinylpyrrolidon als Komponente B1-1 und Neodecansäurevinylester als Komponente B1-2.

Gruppe D

Die auf ethylenisch ungesättigten Dicarbonsäuremono- und -diestern basierenden Copolymere D und deren Herstellung sind in der WO 2008/064986 beschrieben.
Bevorzugt sind Copolymere D, bei denen in der Alkoholgruppe (IV) der Komponente D2 n 0-50 und p 1-60 bedeutet.
Bevorzugt sind weiterhin Copolymere D, bei denen $R^{11}$ eine Phenylgruppe ist, die mit 1, 2, 3 oder 4 gleichen oder verschiedenen $C_1$-$C_{20}$-Alkylgruppen, insbesondere Nonylphenyl, substituiert ist.
Weiterhin bevorzugt sind Copolymere D, bei denen die Komponente D2 ein Mono- oder Diester einer ungesättigten Dicarbonsäure mit 4 bis 8 C-Atomen, insbesondere ein Maleinsäuremono- oder -diester, ist.
Bevorzugt ist die Verwendung von Solubilisatoren der Gruppe A1.
Ganz besonders bevorzugt ist die Verwendung von Solubilisatoren A1.
Bevorzugt ist die Verwendung eines (1) Solubilisators.
Bevorzugt ist auch die Verwendung einer Mischung aus zwei oder mehr Solubilisatoren, insbesondere 2, 3 oder 4 Solubilisatoren. Bevorzugt sind Solubilisatormischungen, die nur Solubilisatoren aus einer (1) der Gruppen A bis H enthalten. Bevorzugt sind auch Solubilisatormischungen, die zwei oder mehr Solubilisatoren aus zwei oder mehr der Gruppen A bis H enthalten.
Bevorzugt beträgt das (Gewichts-)Verhältnis von Wirkstoff(en) und Solubilisator(en) von 1:1 bis 1:200, besonders bevorzugt von 1:1 bis 1:20, ganz besonders bevorzugt von 1:1 bis 1:10.
Erfindungsgemäß bevorzugt ist die Verwendung einer Formulierung in der Wirkstoff(e) und Solubilisator(en) in konzentrierter Form vorliegen welche für die Anwendung mit Wasser verdünnt wird, wobei ein Verdünnungsfaktor von 1:5000 bis 1:10, insbesondere von 1:1000 bis 1:50 bevorzugt ist.
Bevorzugt enthalten diese Konzentrate 1 bis 75 Gew.-% (bezogen auf das gesamte Konzentrat) an der Mischung aus Wirkstoff(en) und Solubilisator(en).
Es ist auch möglich, eine Formulierung des Wirkstoffs entsprechend zu verdünnen und dann Solubilisator zuzusetzen oder diese Formulierung mit Wasser, das den Solubilisator enthält, zu verdünnen.
In einer Ausführungsform der Erfindung werden neben Wirkstoff(en) (a) und Solubilisator(en) (b) ein oder mehrere Adjuvantien (c) verwendet. Bevorzugt sind dabei zum einen die in der WO 03/053345 beschriebenen Adjuvantien, das heißt ein oder mehrere Stoffe aus den Gruppen

Z1 Tristyrylalkylethersulfate oder -phosphate, wie 2,4,6-Tris[1-(phenyl)ethyl]phenyl-omega-hydroxy-poly(oxyethylen)sulfat, die z.B. als Soprohor® 4D-384, Soprophor® 30-33, Soprophor® BSU und Soprophor® 796IP von Rhodia erhältlich sind;

Z2 nichtionische Tenside basierend auf Perfluoralkylethoxylat (beispielsweise erhältlich als Fluowet® OTV von Clariant);

Z3 eine Mischung aus 83% hochraffiniertem Petroleumöl auf Paraffinbasis und 17% Alkylarylpolyoxyethylen-glykolen (erhältlich als Drexel Activate Oil von Drexel Chemical Company);

Z4 Polyether oder organomodifizierte Tri- und Polysiloxane, wie modifizierte Polysiloxanpolyether, beispielsweise erhältlich als Break Thru® S240 von Evonik oder Silwet L-77 von Momentive;

Z5 eine nichtionische Tensid-Mischung aus Alkyloxypolyethylenoxyethanolen der Formel $CH_3CH[(CH_2)_nCH_3][O(C_2H_4O)_mH]$ mit n = 9-15 und m = 3-40 (erhältlich als SM-9® von Safe Materials, Inc.)

Z6 eine Silikontensidmischung aus 100% 2-(3-hydoxypropyl)heptamethyltrisiloxan, ethoxyliertem Acetat, Allyloxypolyethylenglykol-monoallylacetat un Polyethylenglykol-diacetat (erhältlich als Sylgard® 309 von Wilber-Ellis-Company);

Z7 ein bioabbaubares, gering schäumendes nichtionisches Tensid enthaltend Primäralkyl-polyoxyethylen-ether, freie Fettsäuren und Adjuvantien (erhältlich als Aktivator 90® von Laveland Industries, Inc.);

Z8 eine nichtionische Tensidmischung auf Sojabohnen basierenden Fettsäure- und Alkohol Ethoxylaten (erhältlich als Preference® NIS von Cenex/Lan O'Lakes Agronomy Company);

Z9 eine anionische Tensidmischung enthaltend 58% Ammonium n-Alkoholether-sulfat (erhältlich als Rhodapex® CO-436 von Rhodia);

Z10 eine anionische Tensidmischung enthaltend 58% Ammonium Nonylphenolether-sulfat (erhältlich als Rhodapex® CE-128 von Rhodia);

Z11 eine Mischung aus Polyalkylenoxid-modifiziertem Polydimethylsiloxan und nichtionischen Tensiden (erhältlich als Thoroughbred® von Estes Inc.) und

Z12 ein nichtionisches Detergens aus 100% Polyoxyethylen-(10)-iso-octylcyclohexyl-ether (erhältlich als Triton® x-100 von Aldrich Chemical Company).

Darüber hinaus bevorzugt als Adjuvantien (c) sind Verbindungen aus der Gruppe Z13:

Z13 alkoxylierte Fettalkohole und/oder Fettsäuren, welche jeweils zusätzlich verethert, sulfoniert oder phosphoniert sein können, z.B. erhältich als Genapol® XM 100 oder Genapol® 060 von Clariant beziehungsweise als Alkamul® B oder Alkamul®A von Rhodia.

Bevorzugt sind Adjuvantien der Gruppen Z1, Z4 und Z13, insbesondere Z1 und Z4.

In einer Ausführungsform der Erfindung werden ein oder mehrere Adjuvantien der Gruppen Z1 bis Z14 eingesetzt. In einer weiteren Ausführungsform der Erfindung werden keine Adjuvantien der Gruppen Z1-Z13, bevorzugt der Gruppen Z1 bis Z12 eingesetzt.

Falls Adjuvantien der Gruppen Z1-Z13 zum Einsatz kommen, können sie dem Konzentrat oder auch erst der Applikationsbrühe zugesetzt werden. Die Zugabe in die Applikationsbrühe kann zB. simultan mit dem Solubilisator geschehen.

Die Menge an Adjuvantien Z1-Z13 - falls eingesetzt - beträgt vorzugsweise mindestens die Hälfte, besonders bevorzugt genausoviel wie die eingesetzte Menge in g an Wirkstoff und maximal bis zu fünfzigmal, bevorzugt fünfundzwanzigmal und besonders bevorzugt maximal zwanzigmal die eingesetzte Menge in g an Wirkstoff.

Neben Wirkstoffen (a), Solubilisator(en) (b) und gegebenenfalls Adjuvantien (c) können die Wirkstoffzusammensetzungen (d.h. die Formulierungen und die durch Verdünnung erhältlichen wässrigen Applikationsformen) als Komponente (d) übliche Formulierungshilfsmittel in den hierfür üblichen Mengen enthalten.

Hierzu zählen beispielsweise Mittel zur Modifizierung der Rheologie (Verdicker), Antischaummittel, Bakterizide, Frostschutzmittel Mittel zur Steuerung des pH-Wertes, Stabilisatoren und Weichmacher.

Geeignete Verdicker sind Verbindungen, die wässrigen Zusammensetzungen ein pseudoplastisches Fließverhalten verleihen, d. h. hohe Viskosität im Ruhezustand und niedrige Viskosität im bewegten Zustand. Hier sind beispielsweise Polysaccharide wie Xanthan (Kelzan® der Fa. Kelco; Rhodopol® 23 von Rhone Poulenc; oder Veegum® der Firma R.T. Vanderbilt) sowie anorganische Schichtmineralien wie Attaclay® (Firma Engelhardt) oder Van Gel B (Firma R.T. Vanderbilt) zu nennen.

Geeignete Stabilisatoren können niedermolekulare Komponenten sein, wie beispielsweise Mono- und Diglyceride, Ester der Monoglyceride, Alkylglucoside, Lecithin, Fettsäurederivate von Harnstoff und Urethanen.

Geeignete Weichmacher sind Saccharose, Glucose, Lactose, Fructose, Sorbit, Mannit oder Glycerin.

Als für die erfindungsgemäßen Zusammensetzungen geeignete Antischaummittel kommen beispielsweise Silikonemulsionen (wie z. B. Silikon® SRE, Firma Wacker oder Rhodorsil® der Firma Rhodia), langkettige Alkohole, Fettsäuren, und deren Gemische in Betracht.

Bakterizide können zur Stabilisierung den erfindungsgemäßen Zusammensetzungen gegen Befall mit Mikroorganismen zugesetzt werden. Hierbei handelt es sich typischerweise um Isothiazolon-Verbindungen, z. B. 1,2-Benzisothiazolin-3-on, 5-Chlor-2-methylisothiazol-3-on, 2-Methylisothiazol-3-on oder 2-Octylisothiazol-3-on, die beispielsweise unter den Handelsbezeichnungen Proxel® der Fa. Arch Chemical Inc., Acticide® RS der Fa. Thor Chemie und Kathon® MK der Firma Rohm & Haas erhältlich sind.

Geeignete Frostschutzmittel sind organische Polyole, z. B. Ethylenglycol, Propylenglycol oder Glycerin. Diese werden in wässrigen Formulierungen eingesetzt, üblicherweise in Mengen von nicht mehr als 20 Gew.-%, z. B. 1 bis 20 Gew.-% und insbesondere 2 bis 10 Gew.-%, bezogen auf das Gesamtgewicht der wässrigen Wirkstoffformulierung.

Gegebenenfalls können die Wirkstoffzusammensetzungen 0,1 bis 5 Gew.-%, bezogen auf die Gesamtmenge der hergestellten Zubereitung, Mittel zur pH-Wert Regulation der Zubereitung oder der verdünnten Applikationsform enthalten, wobei sich die Menge und Art des eingesetzten Mittels nach den chemischen Eigenschaften und der Menge der Wirkstoffe und Solubilisatoren richtet. Beispiele für Puffer sind Alkalisalze schwacher anorganischer oder organischer Säuren wie z. B. Phosphorsäure, Borsäure, Essigsäure, Propionsäure, Citronensäure, Fumarsäure, Weinsäure, Oxalsäure und Bernsteinsäure.

Beispiele für konventionelle oberflächenaktive Substanzen sind die im Folgenden angegebenen nichtionischen, anionischen, kationionische oder zwitterionischen Emulgatoren, Netzmittel oder Dispergiermittel, z.B. die nichtionischen Substanzen der Gruppen b1) bis b15)

b1) aliphatische $C_8$-$C_{30}$-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Hierbei steht EO für eine von Ethylenoxid, PO für eine von Propylenoxid und BO für eine von Butylenoxid abgeleitete Wiederholungseinheit. Die terminalen Hydroxygruppen dieser Verbindungen können durch einen Alkyl-, Cycloalkyl- oder Acylrest mit 1-24, insbesondere 1 bis 4 Kohlenstoffatomen endgruppenverschlossen sein. Beispiele für derartige Verbindungen sind: Genapol®C-, L-, O-, T-, UD-, UDD-, X-Produkte der Clariant, Plurafac®- und Lutensol®A-, AT-, ON-, TO-, M-Produkte der BASF SE, Marlipal®24- und 013 Produkte von Condea, Dehypon®-Produkte von Henkel, Ethylan®-Produkte von Akzo-Nobel wie Ethylan CD 120;

b2) Copolymere bestehend aus EO, PO und/oder BO Einheiten, insbesondere EO/PO-Blockcopolymere wie die Pluronic®-Produkte von der BASF SE und die Synperonic®-Produkte von Uniquema mit einem Molekulargewicht von 400 bis $10^6$ Dalton sowie Alkylenoxydaddukte von $C_1$-$C_9$ Alkoholen wie Atlox®5000 von Uniquema oder Hoe®-S3510 von Clariant;

b3) Fettsäure- und Triglyceridalkoxylate wie die Serdox®NOG-Produkte von Condea sowie alkoxylierte Pflanzenöle wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, beispielsweise die Emulsogen®-Produkte von Clariant;

b4) Fettsäureamidalkoxylate wie die Comperlan®-Produkte von Henkel oder die Amam®-Produkte von Rhodia;

b5) Alkylenoxydaddukte von Alkindiolen wie die Surfynol®-Produkte von Air Products. Zuckerderivate wie Amino- und Amidozucker von Clariant. Glukitole von Clariant, Alkylpolyglycoside in Form der APG®-Produkte von Henkel oder wie Sorbitanester in Form der Span®- oder Tween®-Produkte von Uniquema oder Cyclo-dextrinester oder -ether von Wacker;

b6) oberflächenaktive Cellulose- und Algin-, Pektin- und Guarderivate wie die Tylose®-Produkte von Clariant, die Manutex®-Produkte von Kelco und Guarderivate von Cesalpina;

b7) Alkylenoxydaddukte auf Polyolbasis wie Polyglykol®-Produkte von Clariant;

b8) grenzflächenaktive Polyglyceride und deren Derivate von Clariant;

b9) Zuckertenside, z.B. alkoxylierte Sorbitanfettsäureester, Alkylpolyglykoside und deren alkoxylierte Derivate;

b10) Alkylenoxidaddukte von Fettaminen;

b11) oberflächenaktive Verbindungen auf Silikon- bzw Silan basis wie die Tegopren®-Produkte von Goldschmidt und die SE®-Produkte von Wacker, sowie die Bevaloid®-, Rhodorsil®- und Silcolapse®-Produkte von Rhodia (Dow Corning, Reliance, GE, Bayer);

b12) grenzflächenaktive Sulfonamide z.B. von Lanxess;

b13) neutrale tensidische Polyvinylverbindungen wie modifiziertes Polyvinylpyrollidon wie die Luviskol®-Produkte von BASF und die Agrimer®-Produkte von ISP oder die derivatisierten Polyvinylacetate wie die Mowilith®-Produkte von Clariant oder die -butyrate wie die Lutonal®-Produkte von der BASF.die Vinnapas®- und die Pioloform®-Produkte von Wacker oder modifizierten Polyvinylalkohole wie die Mowiol®-Produkte von Clariant, und oberfächenaktive Derivate von Montan-, Polyethylen- und Polypropylenwachsen wie die BASF Luwax®-Produkte oder die Licowet®-Produkte von Clariant;

b14) poly- oder perhalogenierte Phosphonate und Phosphinate wie Fluowet®-PL von Clariant;

b15) poly- oder perhalogenierte neutrale Tenside wie beispielsweise Emulsogen®-1557 von Clariant;

b16) (poly)alkoxylierte, insbesondere polyethoxylierte aromatische Verbindungen wie (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 2 bis 4 C-Atome aufweist, vorzugsweise mit 3 bis 10 mol Alkylenoxid umgesetztes Phenol, (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol, Polyarylphenole oder Polyarylphenolalkoxylate [= Polyarylphenol- (poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol und deren Kondensationsprodukte mit Formaldehyd - hierunter bevorzugt sind mit 4 bis 10 mol Ethylenoxid umgesetztes Alkylphenol, kommerziell beispielsweise in Form der Agrisol®-Produkte (Akcros) erhältlich, mit 4 bis 50 mol Ethylenoxid umgesetztes Triisobutylphenol, kommerziell beispielsweise in Form der Sapogenat® T-Produkte (Clariant) erhältlich, mit 4 bis 50 mol Ethylenoxid umgesetztes Nonylphenol, kommerziell beispielsweise in Form der Arkopal®-Produkte (Clariant) erhältlich, mit 4 bis 150 mol Ethylenoxid umgesetztes Tristyrylphenol, beispielsweise aus der Soprophor®-Reihe wie Soprophor® FL oder Soprophor® CY/8 (Rhodia);

die anionischen Substanzen der Gruppen b17) bis b23):

b17) anionische Derivate der unter b1) beschriebenen Produkte in Form von Ethercarboxylaten, Sulfonaten, Sulfaten (= Schwefelsäurehalbestern) und Phosphaten (Phosphorsäuremono- oder diester) der unter b1) beschriebenen Substanzen und deren anorganische (z.B $NH_4^+$, Alkali und Erdalkalimetallsalze) und organische Salzen (z.B. auf Amin- oder Alkanolaminbasis) wie Genapol®LRO, Sandopan®-Produkte, Hostaphat/Hordaphos®-Produkte von Clariant;

b18) anionische Derivate der unter b17) beschriebenen Produkte in Form von Ethercarboxylaten, Sulfonaten, Sulfaten (= Schwefelsäurehalbestern) und Phosphaten (Phosphorsäuremono- oder diester) der unter b17) beschriebenen Substanzen beispielsweise der saure Phosphorsäureester eines mit 2 bis 10 Mol Athylenoxyid ethoxylierten $C_1$-$C_{16}$-Alkylphenols, z.B. der saure Phosphorsäureester eines mit 3 mol oder mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol;

b19) Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das Calciumsalz oder das Isopropylammoniumsalz der Dodecylbenzolsulfonsäure und saures (lineares) Dodecylbenzolsulfonat, kommerziell erhältlich beispielsweise in Form der Marlon®-Produkte (Sasol);

b20) Ligninsulfonate wie Natrium-, Calcium-, oder Ammoniumligninsulfonate wie Ufoxane® 3A, Borresperse AM®320 oder Borresperse® NA;

b21) Kondensationsprodukte von Arylsulfonsäuren wie Phenolsulfonsäure oder Naphthalinsulfonsäure mit Formaldehyd und gegebenenfalls Harnstoff, insbesondere deren Salze und speziell die Alkalimetallsalze und Calcium-Salze, z.B. die Tamol®- und Wettol®-Marken der BASF SE wie Wettol® D1;

b22) Salze von aliphatischen, cycloaliphatischen und olefinischen Carbonsäuren und Polycarbonsäuren, sowie Alpha-Sulfofettsäureester wie von Henkel erhältlich;

b23) Alkansulfonate, Paraffin- und Olefinsulfonate wie Netzer IS®, Hoe®S1728, Hostapur®OS, Hostapur®SAS von Clariant;

weiterhin kationische und zwitterionische Produkte der Gruppen b24) und b25):

b24) quartäre Ammonium-Verbindungen mit 8 bis 22 Kohlenstoffatomen ($C_8$-$C_{22}$) wie z.B. die Genamin®C,L,O,T-Produkte von Clariant;

b25) oberflächenaktive, zwitterionische Verbindungen wie Tauride, Betaine und Sulfobetaine in Form von Tegotain®-Produkte von Evonik, Hostapon®T- und Arkopon®T-Produkte von Clariant.

Bei den Alkylenoxyeinheiten sind Ethylenoxy-, Propylenoxy- und Butylenoxyeinheiten, insbesondere Ethylenoxyeinheiten und Gemische aus Ethylenoxy- und Propylenoxy-Einheiten bevorzugt. Alkoxyliert bedeutet, dass die die oberflächenaktive Substanz eine Polyalkylenethergruppe aufweist, insbesondere eine Poly-$C_2$-$C_4$-alkylenethergruppe, speziell eine Poly-$C_2$-$C_3$-alkylenethergruppe.

In einer bevorzugten Ausführungsform liegen der Wirkstoff und die erfindungsgemäß verwendeten Solubilisatoren in Form einer Formulierung, das heißt in konzentrierter Form, vor. Eine Formulierung im Sinne der Erfindung enthält den oder die erfindungsgemäßen Wirkstoffe in einer Konzentration von mindestens 10 g/l, vorzugsweise mindestens 50 g/l. Geeignete Formulierungen sind z.B. wasserlösliche Konzentrate (SL, LS), redispergierbare Konzentrate (DC), emulgierbare Konzentrate (EC), Emulsionen (EW, EO, ES, ME), Suspensionen (SC, OD, FS), Suspoemulsionen (SE) oder wasserdispergierbare und wasserlösliche Granulate (WG, SG), wasserdispergierbare und wasserlösliche Pulver (WP, SP, SS, WS) oder Gele (GF). Bevorzugt liegt die Zusammensetzung in Form eines wasserlöslichen Konzentrats (SL), eines emulgierbaren Konzentrates (EC), eines Suspensionskonzentrats (SC), wasserdispergierbare und wasserlösliche Granulate (WG, SG) oder eines redispergierbaren Konzentrats (DC), einer Öl-in-Wasser-Emulsion oder einer Mikroemulsion vor.

Die Formulierungen werden meist vor der Anwendung verdünnt. Zur Verdünnung kommen neben Wasser Ölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid oder N-Methylpyrrolidon in Betracht. Bevorzugt wird Wasser oder ein wässriges System verwendet. Es ist auch möglich, den Solubilisator erst der verdünnten Formulierung zuzusetzen. In dieser Ausführungsform erfolgt die erfindungsgemäße Verwendung in Form eines Tankmixes.

Unter wässrigem System wird reines Wasser oder Wasser enthaltend ein Puffersystem oder Salze oder weitere Zusatzstoffe, beispielsweise mit Wasser mischbare Lösungsmittel oder Mischungen daraus, verstanden. Der pH-Wert des wässrigen Systems liegt im allgemeinen im Bereich von 2 bis 13, bevorzugt von 3 bis 12, besonders bevorzugt von 4 bis 10.

Gegebenenfalls können die verdünnten Zusammensetzungen 0,1-5 Gew.-% Puffer bezogen auf die Gesamtmenge der hergestellten Formulierung zur pH-Wert Regulation enthalten, wobei sich die Menge und Art des eingesetzten Puffers nach den chemischen Eigenschaften des Wirkstoffes bzw. der Wirkstoffe richtet. Beispiele für Puffer sind Alkalisalze schwacher anorganischer oder organischer Säuren wie z.B. Phosphorsäure, Borsäure, Essigsäure, Propionsäure, Zitronensäure, Fumarsäure, Weinsäure, Oxalsäure und Bernsteinsäure.

Die verdünnte Zusammensetzung, vorzugsweise eine wässrige Applikationsform wird üblicherweise durch Versprühen oder Vernebeln angewendet. Es können Öle verschiedenen Typs, Netzmittel, Adjuvantien, weitere Wirkstoffe wie Herbizide, Bakterizide oder Fungizide unmittelbar vor der Anwendung Tankmix zugesetzt werden. Diese Mittel können zu den erfindungsgemäßen Zusammensetzungen im Gewichtsverhältnis 1:100 bis 100:1, bevorzugt 1:10 bis 10:1 zugemischt werden. Die Termitizidkonzentration im Tankmix kann in größeren Bereichen variiert werden.

In einer bevorzugten Ausführungsform wird der insektizide Wirkstoff und der polymere Solubilisator als SL-Formulierung eingesetzt. SL-Fomulierung sind definitionsgemäß wasserlösliche Konzentrate, welche den oder die Wirkstoffe gegebenenfalls mit weiteren Formulierungshilfsmitteln gelöst in einem geeigneten Lösungsmittel enthalten und als klare oder opaleszente Flüssigkeit vorliegen. Sie sind dadurch gekennzeichnet, dass sie auch nach Verdünnen in der Spritzbrühe eine echte Lösung des Wirkstoffs in Wasser bilden (FAO&WHO Spezifikation für Pestizide (März 2006)).

Bevorzugt ist auch der Einsatz als WG, SC-, EW-, ME- oder DC-Formulierung.

In einer weiteren bevorzugten Ausführungsform der Erfindung wird die Kombination aus Wirkstoff, polymerem Solubilisator und gegebenenfalls Adjuvans als Tankmischung (Tankmix) eingesetzt, d.h., der polymere Solubilisator und/oder gegebenenfalls ein Adjuvans werden erst der wässrigen Applikationsform (Spritzbrühe) zugesetzt.

Die erfindungsgemäß eingesetzten Formulierungen bzw. Tankmischungen und daraus erhaltene wässrige Applikationsformen zeigen eine erhöhte Bodenbeweglichkeit der verwendeten schwerlöslichen Termitizide. Sie eignen sich somit zur Bekämpfung von im Boden lebenden Schädlingen, beispielsweise beim Schutz von Materialien und Gebäuden oder Pflanzen. Besonders bevorzugt eignen sich die erfindungsgemäßen Formulierungen zur Bekämpfung von Termiten, Ameisen und Nematoden, insbesondere zur Bekämpfung von Termiten.

Ein Gegenstand der Erfindung ist daher auch ein Verfahren zur Bekämpfung von bodenbürtigen, invertebraten Schädlingen, wobei man

a) mindestens einen schwerlöslichen insektiziden Wirkstoff, insbesondere Fipronil, und

b) mindestens einen polymeren Solubilisator, welcher die Eigenschaft aufweist, dass der termitizide Wirkstoff in einer 1 gew.-%igen wässrigen Lösung des polymeren Solubilisators bei 25°C und 1,01325 bar eine mindestens vierzigmal höhere Löslichkeit aufweist als unter gleichen Bedingungen in reinem Wasser und gewählt ist aus der Gruppe der oben angegebenen Solubilisatoren A1 und B1 in einem Gewichtsverhältnis (a : b) ≤ 1 in einer wässrigen Applikationsform auf oder in einem Boden, der von den Schädlingen genutzt wird, ausbringt.

In einer bevorzugten Ausführungsform sind die Schädlinge Ameisen.

In einer weiteren bevorzugten Ausführungsform befindet sich auf dem Boden eine Zuckerrübenkultur.

In einer weiteren besonders bevorzugten Ausführungsform sind die Schädlinge Ameisen und auf dem Boden befindet sich eine Zuckerrübenkultur.

In einer weiteren bevorzugten Ausführungsform sind die Schädlinge Nematoden.

Ein weiterer Gegenstand der Erfindung ist ein Verfahren zur Bekämpfung von Termiten, wobei man

a) mindestens einen schwerlöslichen insektiziden Wirkstoff, insbesondere Fipronil, und

b) mindestens einen polymeren Solubilisator, welcher die Eigenschaft aufweist, dass der termitizide Wirkstoff in einer 1 gew.-%igen wässrigen Lösung des polymeren Solubilisators bei 25°C und 1,01325 bar eine mindestens vierzigmal höhere Löslichkeit aufweist als unter gleichen Bedingungen in reinem Wasser und gewählt ist aus der Gruppe der oben angegebenen Solubilisatoren A1 und B1,

in einem Gewichtsverhältnis (a : b) ≤ 1 in einer wässrigen Applikationsform auf oder in einem Boden, der von den Termiten genutzt wird, ausbringt.

In einer bevorzugten Ausführungsform handelt es sich bei dem Boden um den Boden unter einem Gebäude oder im Umkreis von 10m um ein Gebäude.

Beim Schutz von Gebäuden vor Termiten verlangen die gesetzlichen Vorschriften in einigen Ländern das Ausbringen des Termitizids in Gräben von einer gewissen Breite und Tiefe. Üblich sind 6 x 6 inches (15,24 x 15,24 cm) große Gräben, wie sie beispielsweise in USA vorgeschrieben sind.

Durch die erfindungsgemäß erhöhte Bodenbeweglichkeit der termitiziden Wirkstoffe ist es möglich, das Termitizid in Gräben mit geringeren Ausmaßen oder direkt auf den Boden zu applizieren.Gegebenenfalls kann auch eine höher konzentrierte Applikationslösung verwendet werden, um das verwendete Wasservolumen zu reduzieren. In einer weiteren besonders bevorzugten Ausführungsform des erfindungsgemäßen Verfahrens wird dieses zum Schutz von Gebäuden gegen Termiten durchgeführt und das Termitizid, insbesondere Fipronil, in einem Graben mit einer Tiefe von < 3 inches (7,62 cm), bevorzugt in einem Graben mit einer Tiefe von 3 bis 1 inch (7,62-2,54 cm) in den Boden appliziert, der von den Termiten genutzt wird. Bevorzugt ist weiter eine Anwendungsform, bei der die Konzentration des oder der termitiziden Wirkstoffe in der wässrigen Applikationsform mindestens 1000 ppm, vorzugsweise mindestens 1250 ppm beträgt.

Bevorzugt in den obigen Verfahren ist die Verwendung eines schwerlöslichen Insektizids aus der Gruppe Fipronil, Pyrethroide, 4-Chlor-2-(2-chlor-2methylpropyl)-5-[(6-iod-3pyridinyl)methoxy]-3(2H)-pyridazinone (CAS-RN: 120955-77-3), Chlorantraniliprole, Chlorfenapyr, Chlorpyrifos, Cyantraniliprole, Fenoxycarb, Flufenoxuron, Hydramethylnon, Imidacloprid, Indoxacarb, Metaflumizone, Pyriproxifen und Tebufenozide.

Bevorzugt als Termitizid sind Fipronil, Allethrin, Alpha-Cypermethrin, Beta-Cyfluthrin, Bifenthrin, Bioallethrin, 4-Chlor-2-(2-chlor-2methylpropyl)-5-[(6-iod-3-pyridinyl)methoxy]-3(2H)-pyridazinone (CAS-RN: 120955-77-3), Chlorantraniliprole, Chlorfenapyr, Chlorpyrifos, Cyantraniliprole, Cyfluthrin, Cyhalothrin, Cypermethrin, Deltamethrin, Etofenprox, Fenoxycarb, Flufenoxuron, Hydramethylnon, Imidacloprid, Indoxacarb, Metaflumizone, Permethrin, Pyriproxifen, Tebufenozide und Tralomethrin. Besonders bevorzugt sind Fipronil, Alpha-Cypermethrin, Bifenthrin, Chlorantraniliprole Chlorfenapyr, Cyfluthrin, Cypermethrin, Cyantraniliprole, Deltamethrin, Etofenprox, Hydramethylnon, Indoxacarb, Metaflumizone und Permethrin. Ganz besonders bevorzugt sind Fipronil, Alpha-Cypermethrin, Chlorantraniliprole, Chlorfenapyr, Cyantraniliprole, Deltamethrin, Hydramethylnon, Indoxacarb und Metaflumizone. Insbesondere bevorzugt ist Fipronil.

Bevorzugt als Solubilisator(en) sind die Polymere der Gruppe A (insbesondere A1, A2 und/oder A3), B1 und B3 und/oder B5, besonders bevorzugt A (insbesondere A1) und/oder B1.

Bevorzugt sind auch Kombinationen der bevorzugten, besonders bevorzugten, ganz besonders und insbesondere bevorzugten Wirkstoffe mit entsprechenden Solubilisator(en).

Bevorzugt werden Wirkstoff, polymerer Solubilisator und gegebenenfalls Adjuvans als Formulierung eingesetzt. Ebenfalls bevorzugt werden polymerer Solubilisator und/oder gegebenenfalls Adjuvans als Tankmix der wässrigen Applikationsform zugesetzt.

Besonders bevorzugt sind Kombinationen von Fipronil (a) mit mindestens einem Solubilisator (b) der Gruppe(n) A1 und/oder B1.

Erfindungsgemäße Verfahren eignen sich bevorzugt zur Bekämpfung von Termiten (Isoptera), vorzugsweise Bodentermiten, insbesondere der Gattungen Reticulitermes, z.B. der Arten R. flavipes, R. virginicus, R. hageni, R. hesperus, R. okanaganensis, R. malletei, R. fibialis; R. grassei, R. banyulensis, R. balkanensis und R. urbis; Coptotermes, z.B. der Arten C. testaceus, C. gestroi und C. formosanus; Heterotermes, z.B. der Arten H. aureus, H. tenuis, H. convexinotatus und H. cardini; sowie Trockenholztermiten, insbesondere der Gattungen Incisitermes, insbesondere der Arten I. snyderi und I. minor; und Cryptotermes, insbesondere der Arten C. brevis und C. cavifrons.

Ameisen, die erfindungsgemäß bekämpft werden können, sind z.B. aus den Gattungen Atta, wie Atta cephalotes, Atta capigura, Atta cephalotes, Atta laevigata, Atta robusta, Atta sexdens, Atta texana; Crematogaster; Lasius; Monorium, wie Monorium pharaonis, Solenopsis wie Solenopsis geminata, Solenopsis invicta, Solenopsis richteri, Solenopsis xyloni; Pogonomyrmex, wie Pogonomyrmex barbatus, Pogonomyrmex californicus; Pheidole, wie Pheidole megacephala, Dasymutilla, wie Dasymutilla occidentalis; Camponotus, wie Camponotus floridanus; und Linepithema, wie Linepithema humile.

Pflanzennematoden, die erfindungsgemäß bekämpft werden können, sind z.B. Angunina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radapholus similis, Rotylenchus spp., Trichodorus spp., Tylenchorhynchus spp., Tylenchulus spp., Tylenchulus semipenetrans und Xiphinema spp.

Die erfindungsgemäß eingesetzten Formulierungen sind teilweise bekannt und teilweise neu.

Gegenstand der Erfindung ist auch eine Formulierung (F1), enthaltend

a) einen oder mehrere Wirkstoffe aus der Gruppe Fipronil, Allethrin, Alpha-Cypermethrin, Beta-Cyfluthrin, Bifenthrin, Bioallethrin, 4-Chlor-2-(2-chlor-2methylpropyl)-5-[(6-iod-3-pyridinyl)methoxy]-3(2H)-pyridazinone (CAS-RN: 120955-77-3), Chlorantraniliprole, Chlorfenapyr, Chlorpyrifos, Cyantraniliprole, Cyfluthrin, Cyhalothrin, Cypermethrin, Deltamethrin, Etofenprox, Fenoxycarb, Flufenoxuron, Hydramethylnon, Imidacloprid, Indoxacarb, Metaflumizone, Permethrin, Pyriproxifen, Tebufenozide und Tralomethrin und

b) mindestens einen polymeren Solubilisator, welcher die Eigenschaft aufweist, dass der termitizide Wirkstoff in einer 1 gew.-%igen wässrigen Lösung des polymeren Solubilisators bei 25°C und 1,01325 bar eine mindestens vierzigmal höhere Löslichkeit aufweist als unter gleichen Bedingungen in reinem Wasser aus der oben beschriebenen Gruppe A1

in einem Gewichtsverhältnis (a : b) $\leq$ 1.

Bevorzugte, besonders bevorzugte, ganz besonders bevorzugte und insbesondere bevorzugte Wirkstoffe (a) sind die jeweils bei den erfindungsgemäßen Verfahren angegebenen.

Besonders bevorzugt beträgt das (Gewichts-)Verhältnis von Wirkstoff(en) und polymeren Solubilisator(en) von 1:1 bis 1:20, besonders bevorzugt von 1:1 bis 1:10, ganz besonders bevorzugt von 1:1 bis 1:8.

In einer Ausführungsform der Erfindung enthalten die Formulierungen neben Wirkstoff(en) und Solubilisator(en) ein oder mehrere oben beschriebene Adjuvantien aus den Gruppen Z1-Z13. In einer weiteren bevorzugten Ausführungsfrom enthält die Formulierung (F1) kein Adjuvans aus den Gruppen Z1-Z13, bevorzugt Z1-Z12.

Bevorzugt ist die Formulierung (F1) eine SL-Formulierung. Ebenso bevorzugt ist die Formulierung (F1) eine WG, SC-, ME-, EW- oder eine DC-Formulierung.

Gegenstand der Erfindung ist auch eine SL-, SC-, WG- oder DC-Formulierung, bevorzugt SL- oder DC-Formulierung, insbesondere SL-Formulierung (F2), enthaltend

a) Fipronil und

b) mindestens einen polymeren Solubilisator, welcher die Eigenschaft aufweist, dass der termitizide Wirkstoff in

einer 1 gew.-%igen wässrigen Lösung des polymeren Solubilisators bei 25°C und 1,01325 bar eine mindestens vierzigmal höhere Löslichkeit aufweist als unter gleichen Bedingungen in reinem Wasser, aus der oben beschriebenen Gruppe A1.

in einem Gewichtsverhältnis (a : b) ≤ 1.

Bevorzugt beträgt das (Gewichts-)Verhältnis von Wirkstoff(en) und Solubilisator(en) von 1:1 bis 1:20, besonders bevorzugt von 1:1 bis 1:10, ganz besonders bevorzugt von 1:1 bis 1:8.

In einer Ausführungsform der Erfindung enthält die Formulierung (F2) neben Wirkstoff(en) und Solubilisator(en) ein oder mehrere oben beschriebene Adjuvantien aus den Gruppen Z1-Z13. In einer weiteren Ausführungsform der Erfindung enthält die SL-Formulierung (F2) keine Adjuvantien aus den Gruppen Z1-Z13, bevorzugt Z1-Z12.

Gegenstand der Erfindung ist weiterhin eine Formulierung (F3), enthaltend

a) einen oder mehrere Wirkstoffe aus der Gruppe Fipronil, Allethrin, Alpha-Cypermethrin, Beta-Cyfluthrin, Bifenthrin, Bioallethrin, 4-Chlor-2-(2-chlor-2methylpropyl)-5-[(6-iod-3-pyridinyl)methoxy]-3(2H)-pyridazinone (CAS-RN: 120955-77-3), Chlorantraniliprole, Chlorfenapyr, Chlorpyrifos, Cyantraniliprole, Cyfluthrin, Cyhalothrin, Cypermethrin, Deltamethrin, Etofenprox, Fenoxycarb, Flufenoxuron, Hydramethylnon, Imidacloprid, Indoxacarb, Metaflumizone, Permethrin, Pyriproxifen, Tebufenozide und Tralomethrin,

b) mindestens einen polymeren Solubilisator, welcher die Eigenschaft aufweist, dass der termitizide Wirkstoff in einer 1 gew.-%igen wässrigen Lösung des polymeren Solubilisators bei 25°C und 1,01325 bar eine mindestens vierzigmal höhere Löslichkeit aufweist als unter gleichen Bedingungen in reinem Wasser, aus der oben beschriebenen Gruppe A1
in einem Gewichtsverhältnis (a : b) ≤ 1 und

c) ein oder mehrere der oben beschriebenen Adjuvantien aus den Gruppen Z1-Z13, bevorzugt Z1-Z12.

Bevorzugte, besonders bevorzugte, ganz besonders bevorzugte und insbesondere bevorzugte Wirkstoffe (a) sind die jeweils bei den erfindungsgemäßen Verfahren angegebenen.

Besonders bevorzugt beträgt das (Gewichts-)Verhältnis von Wirkstoff(en) und polymeren Solubilisator(en) von 1:1 bis 1:20, besonders bevorzugt von 1:1 bis 1:10, ganz besonders bevorzugt von 1:1 bis 1:8.

Bevorzugt ist eine WG-, SC-, DC-, SC-, ME-, oder EW-Formulierung, in der Wirkstoff(e) und Solubilisator(en) in konzentrierter Form vorliegen, welche für die Anwendung mit Wasser verdünnt wird, wobei ein Verdünnungsfaktor von 1:3000 bis 1:10, insbesondere von 1:1000 bis 1:50 bevorzugt ist.

In einer bevorzugten Ausführungsform der Erfindung enthält die Formulierung F3 ein oder mehrere der oben beschriebenen Adjuvantien aus den Gruppen Z1, Z4 und/oder Z13, insbesondere Z1 und/oder Z4.

Die erfindungsgemäßen Formulierungen F1, F2, F3 eigenen sich bevorzugt zum Einsatz in den erfindungsgemäßen Verfahren.

Auf die folgenden Schriften wird hiermit - insbesondere was die Beschreibung der Solubilisatoren betrifft - ausdrücklich Bezug genommen, Europäische Patentanmeldung EP 09159881.3 (= WO 2010/130599 A1) (A1), WO 99/27916 (B1), WO 2007/017452 (B1), WO 2008/064990 (B1), und WO 2008/064986 (D).

Die Erfindung wird durch die Beispiele näher erläutert, ohne sie dadurch einzuschränken.

**Beispiele**

Abkürzungen

| | |
|---|---|
| AIBN: | Azo-bis-(isobutyronitril) |
| AMPS: | 2-Acrylamido-2-methylpropansulfonsäure |
| DBTL: | Dibutylzinndilaurat |
| IP: | Isopropanol |
| I PDI: | Isophorondiisocyanat |
| IT: | Innentemperatur |
| LA: | Laurylacrylat |
| MA: | Maleinsäureanhydrid |
| NaA: | Natriumacrylat |
| PEGMEMA | Polyethylenglykolmonomethylethermethacrylat (M = 475 g/mol) 475: |

S: Styrol
T: Zulaufzeit
TBPPiv: t-Butylperpivalat
TMP x 15,7 PO: Umsetzungsprodukt von Trimethylolpropan mit 15,7 molarem Überschuss Propylenoxid
VP: Vinylpyrrolidon

Eingesetzte Materialien

a) Termitizide Wirkstoffe

Fipronil wurde als kommerzielle SC-Formulierung Termidor® (enthaltend 96 g/l Fipronil, BASF SE) eingesetzt oder als technischer Wirkstoff mit einer Reinheit von ca. 90%.

b) Solubilisatoren

Solubilisatoren der Gruppe B1:

| | Zusammensetzung [Gew.-%] | | | |
|---|---|---|---|---|
| Bezeichnung | VP | LA | NaA | AMPS |
| S1 | 90 | 10 | - | - |
| S2 | 80 | 20 | - | - |
| S3 | 70 | 30 | - | - |
| S4 | 78 | 20 | 2 | - |
| S5 | 70 | 20 | 10 | - |
| S6 | 76 | 20 | 2 | 2 |

Solubilisatoren der Gruppe D:

S7: MA/S (50:50 mol-%), wobei 50% der MA-Einheiten mit einem $C_{13}$-Fettalkoholalkoxylat verestert sind.

Solubilisatoren der Gruppe A (A1):

Solubilisator S8 (Hyperverzweigtes Polycarbonat auf Basis von Diethylcarbonat und dem Umsetzungsprodukt von Trimethylolpropan mit 15,7 molarem Überschuss Propylenoxid funktionalisiert mit PEG-Ketten (Funktionalisierungsgrad 100%))

Solubilisator S9 (Hyperverzweigtes Polycarbonat auf Basis von Diethylcarbonat und dem Umsetzungsprodukt von Trimethylolpropan mit 15,7 molarem Überschuss Propylenoxid funktionalisiert mit einem kammartigen PVP-co-PLaurylacrylat-co-PEGMEMA-Copolymer (Funktionalisierungsgrad 50%))

Solubilisator S10 (Hyperverzweigter Polycarbonat-Kern auf Basis von Diethylcarbonat und dem Umsetzungsprodukt von Trimethylolpropan mit 15,7 molarem Überschuss Propylenoxid funktionalisiert mit PEG-b-Polycaprolacton Blockcopolymer (Funktionalisierungsgrad 100%)

c) Adiuvantien

Soprophor 4D384:

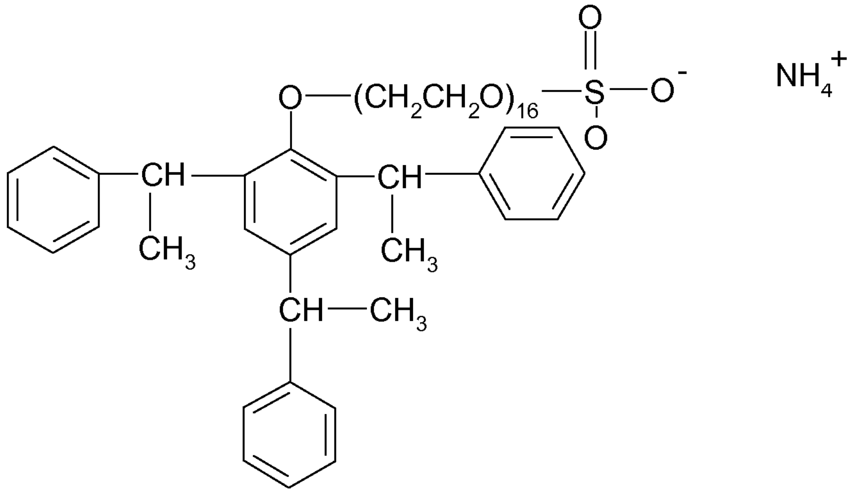

Break Thru®S 240 (Evonik.): nichtionisches Tensid auf Basis von modifzierten Polysiloxenpolyethern

Synthesebeispiele für Solubilisatoren

Beispiel 1 Solubilisator S1 (N-Vinylpyrrolidon/Laurylacrylat-Copolymer [90/10 Gew.-%])

Die Vorlage (350g Isopropanol, 10 g N-Vinylpyrrolidon) wurde mit Stickstoff begast und auf eine Reaktorinnentemperatur von 80°C aufgeheizt. Anschließend wurde mit der Zugabe der Zuläufe 1-3 begonnen. Zulauf 1 (400g Isopropanol, 40 g Laurylacrylat) wurde innerhalb von 5,5h, Zulauf 2 (300g Isopropanol, 350g N-Vinylpyrrolidon) innerhalb von 6h und Zulauf 3 (19g ε-Butylperpivalat 75%, 100g Isopropanol) innerhalb von 6,5h zugegeben. Die Mischung wurde noch für 2h nachpolymerisiert. Anschließend wurde das Isopropanol abdestilliert und das Reaktionsgemisch einer Wasserdampfdestillation unterworfen. Nach der Destillation wurde die Polymerlösung mit 200g Wasser verdünnt.

Man erhielt ein Polymer mit einem K-Wert von 14 und einem Molgewicht $M_n$ von 4400 g/mol und $M_w$ von 7600 g/mol.

Entsprechend wurden die Solubilisatoren S2 und S3 hergestellt:

S2: 80g Laurylacrylat und Zulauf 2 mit 310 g N-Vinylpyrrolidon
$M_n$ = 2500 g/mol und $M_w$ = 5000 g/mol, K-Wert = 12

S3: 120g Laurylacrylat und Zulauf 2 mit 270 g N-Vinylpyrrolidon
$M_n$ = 1300 g/mol und $M_w$ = 2900g/Mol, K-Wert = 7

Beispiel 2 Solubilisator S4 (VP/LA/NaAcrylat-Copolymer [78/20/2])

Die Vorlage (19,13g Zulauf 1) wurde mit Stickstoff begast und auf eine Reaktorinnentemperatur von 80°C aufgeheizt. Anschließend wurde mit der Zugabe der Zuläufe 1-4 begonnen. Zulauf 1 (400g Isopropanol, 80g Laurylacrylat) wurde innerhalb von 5,5h, Zulauf 2 (300g Isopropanol, 312g VP) und Zulauf 3 (50g $H_2O$, 21g einer 37,5 gew.-%-igen Lösung von Natriumacrylat) innerhalb von 6h und Zulauf 4 (100g Isopropanol, 19g t-Butylperpivalat) innerhalb von 6,5h zugegeben. Die Mischung wurde dann für 2h nachpolymerisiert. Das Isopropanol wurde abdestilliert und die Reaktionsmischung einer Wasserdampfdestillation unterworfen. Nach der Destillation wurde die Polymerlösung mit 200g Wasser verdünnt.

Man erhielt ein Polymer mit einem K-Wert von 12und einem Molgewicht Mn = 2300 g/mol.

Entsprechend wurde Solubilisator S5 hergestellt:

S5 (VP/LA/NaA [70/20/10]) Copolymer

Analog Beispiel 2 mit 280g VP und 105g einer 37,5 gew.-%-igen Natriumacrylat-Lösung.
Man erhielt ein Polymer mit einem K-Wert von 12 und einem Molgewicht Mn = 2100 g/mol

Beispiel 3 Solubilisator S6 (VP/LA/AMPS-Na/NaA 76:20:2:2)

Die Vorlage (250g Isopropanol, 25g N-Vinylpyrrolidon, 25g Laurylacrylat) wurde mit Stickstoff begast und auf eine Reaktorinnentemperatur von 75°C aufgeheizt. Dann wurden Zulauf 1 (350g Isopropanol, 165g N-Vinylpyrrolidon, 25g Laurylacrylat), Zulauf 2 (222g Wasser, 28g AMPS-Natriumsalz, pH7) und Zulauf 3 (27g Wasser, 13g Natriumacrylat) innerhalb von 3h zugegeben. Zulauf 4 (47,5g Wasser, 2,5g 2,2'-Azo-bis-(2-methylpropionamidin)dihydrochlorid [WAKO® V 50, Wako Chemicals]) wurde innerhalb von 4,5h zugegeben. Nach 1 h Nachpolymerisation wurde Zulauf 5 (10g Wasser, 0,65g 2,2'-Azo-bis(2-methylpropionamidin)dihydrochlorid [WAKO® V 50] zugegeben und 2h nachpolymerisiert. Das Isopropanol wurde abdestilliert und die Reaktionsmischung einer Wasserdampfdestillation unterworfen.

Man erhielt ein Polymer mit einem K-Wert von 22 und einem Molgewicht $M_n$ von 9700 g/mol und $M_w$ von 31 300 g/mol.

Beispiel 4 Solubilisator S7 (Maleinsäureanhydrid/Styrol-(50/50)-Copolymer teilverestert mit $C_{13}$-Fettalkoholalkoxylat)

Die Vorlage (100g MA/S-Copolymer [SMA® 100 F, Sartomer], 575 g $C_{13}$-Fettalkoholalkoxylat) wurde mit Stickstoff begast und auf eine Reaktorinnentemperatur von 150°C aufgeheizt. Die Reaktionsmischung wurde dann 4h bei dieser Temperatur gerührt.

Man erhielt ein Polymer mit einem K-Wert von 12 und einem Molgewicht Mn = 2300 g/mol.

Beispiel 5: Solubilisator S8 (Hyperverzweigtes Polycarbonat auf Basis von Diethylcarbonat und dem Umsetzungsprodukt von Trimethylolpropan mit 15,7 molarem Überschuss Propylenoxid, funktionalisiert mit PEG-Ketten (Funktionalisierungsgrad 100%)).

5.1 Hyperverzweigter Polycarbonat-Kern mit terminalen Hydroxylgruppen

2298 g TMP x 15,7 PO, 284 g Diethylcarbonat sowie 2 g Katalysator DBTL wurden vorgelegt und zum Sieden erhitzt. Die siedende Reaktionsmischung wurde so lange gerührt (ca 14 h), bis die Siedetemperatur des Reaktionsgemisches durch die Siedekühlung des freiwerdenen Ethanols auf eine konstante Temperatur von ca 143 °C gefallen war. Nun wurde der Rückflusskühler durch eine Destillationsbrücke ersetzt und das bei der Reaktion entstandene Ethanol abdestilliert, wobei die Temperatur des Reaktionsgemisches bis 230 °C erhöht wurde. Das Ethanol wurde in einem gekühlten Rundkolben gesammelt, ausgewogen und der Umsatz so gegenüber dem theoretisch möglichen Vollumsatz prozentual ermittelt. Nach dem Erreichen eines Umsatzes von 89% wurde bei einer Temperatur von 160 °C für 1 Stunde trockener Stickstoff durch die Reaktionsmischung geleitet, um noch vorhandene Restmengen an Monomeren zu entfernen. Danach wurde der Ansatz auf Raumtemperatur abgekühlt.

Das gebildete Polymer (Mn = 2400 g/mol; Mw = 4600 g/mol; OH-Zahl: 87 mg KOH/g Polymer) wurde in Form einer gelb gefärbten, hoch viskosen Flüssigkeit erhalten, welche nicht wasserlöslich war.

5.2 Hyperverzweigter Polycarbonat-Kern, funktionalisiert mit PEG-Ketten (Funktionalisierungsgrad 100%)

5.2.1 123,5 g Polyethylenglykolmonomethylether (Mn = 500 g/mol) wurden vorgelegt und im Vakuum bei 80 °C von Wasserresten befreit. Nach dem Abkülen auf Raumtemperatur wurde der Ansatz unter Stickstoff gesetzt und das Polymer in 123,5 g Butylacetat gelöst. Nun wurden 50,0 g Isophorondiisocyanat zugegeben und das Gemisch auf 50 °C erhitzt. Durch Zugabe von 19 mg Zink-Neodecanoat, gelöst in 1 mL Butylacetat, wurde die Reaktion gestartet und im Verlauf von 3,5 h bei 50 °C bis auf einen NCO-Gehalt von 2,87 % gefahren. Anschließend wurde die Reaktion durch Abkülen auf -20 °C beendet. Das Umsetzungsprodukt wurde ohne weitere Aufarbeitung direkt in Stufe 5.2.2 eingesetzt.

5.2.2 30,1 g des hydrophoben hyperverzeigten Polycarbonat-Kerns aus Stufe 5.1 wurden vorgelegt und unter Stickstoff mit 71,0 g des Reaktionsgemischs 5.2.1 versetzt. Nun wurde der Ansatz auf 80 °C erhitzt und die Reaktion durch Zugabe von 7 mg DBTL, gelöst in 1 mL Butylacetat, gestartet. Nach dem vollständigen Umsatz aller NCO-Gruppen (NCO-Gehalt 0 %) wurde der Ansatz abgekühlt und das Lösungsmittel im Vakuum entfernt. Schließlich wurde der Solubilisator S8 (Mn = 5070 g/mol) in Form einer gelb gefärbten, hoch viskosen Flüssigkeit erhalten, welche vollständig wasserlöslich war.

Beispiel 6: Solubilisator S9 (Hyperverzweigtes Polycarbonat auf Basis von Diethylcarbonat und dem Umsetzungsprodukt von Trimethylolpropan mit 15,7 molarem Überschuss Propylenoxid, funktionalisiert mit einem kammartigen

PVP-co-PLaurylacrylat-co-PEGMEMA-Copolymer (Funktionalisierungsgrad 50%)).

6.1 Hyperverzweigter Polycarbonat-Kern mit terminalen Hydroxylgruppen

1149 g des trifunktionellen Alkohols TMP x 15,7 PO, 144 g Diethylcarbonat sowie 1 g Katalysator DBTL wurden wie in Synthesebeispiel 5.1 umgesetzt. Das gebildete Polymer (Mn = 4200 g/mol; Mw = 14500 g/mol; OH-Zahl: 85 mg KOH/g Polymer) wurde in Form einer gelb gefärbten, hoch viskosen Flüssigkeit erhalten, welche nicht wasserlöslich war.

6.2 Hyperverzweigter Polycarbonat-Kern, funktionalisiert mit einem kammartigen PVP-co-PLaurylacrylat-co-PEGMEMA-Copolymer (Funktionalisierungsgrad 50%)

6.2.1 100,0 g THF wurden unter Stickstoff vorgelegt und anschließend unter Rückfluss erhitzt. Innerhalb von 3 h wurde ein Gemisch 1 aus 155,9 g Laurylacrylat, 144,2 g N-Vinylpyrrolidon und 163,3 g PEGMEMA 475, gelöst in 200,0 g THF, sowie zeitgleich innerhalb von 4 h ein Gemisch 2 aus 8,8 g AIBN und 27,8 g Mercaptoethanol, gelöst in 200,0 g THF, mit Hilfe zweier Dosierpumpen langsam dem Ansatz zugeführt. Nach beendeter Zugabe des Gemischs 2 wurde die Reaktionsmischung weitere 18 h unter Rückfluss erhitzt. Nachfolgende Kontrolle der Restmonomere mittels GC ergab einen Anteil an Laurylacrylat von <1%, so dass der Ansatz abgekühlt und das Produkt (Mn = 1000 g/mol) direkt weiter in Stufe 2 eingesetzt wurde.

6.2.2 278,4 g des Reaktionsgemischs 6.2.1 wurden vorgelegt und im Vakuum vom Lösungsmittel THF befreit. Nach dem Abkülen auf Raumtemperatur wurde der Ansatz unter Stickstoff gesetzt und der Rückstand in 140,0 g Butylacetat gelöst. Nun wurden 20,0 g Isophorondiisocyanat zugegeben und das Gemisch auf 50 °C erhitzt. Durch Zugabe von 21 mg Zink-neodecanoat, gelöst in 1 mL Butylacetat, wurde die Reaktion gestartet und im Verlauf von 6 h bei 60 °C sowie insgesamt 16 h bei Raumtemperatur bis auf einen NCO-Gehalt von 1,16 % gefahren. Anschließend wurde die Reaktion durch Abkülen auf -20 °C beendet. Das Umsetzungsprodukt wurde ohne weitere Aufarbeitung direkt in Stufe 3 eingesetzt.

6.2.3 6,0 g des hydrophoben hyperverzeigten Polycarbonat-Kerns 6.1 wurden vorgelegt und unter Stickstoff in 6,0 g Butylacetat gelöst. Nun wurde der Ansatz mit 19,2 g des Reaktionsgemischs 6.2.2 versetzt, auf 80 °C erhitzt und die Reaktion durch Zugabe von 13 mg DBTL, gelöst in 1 mL Butylacetat, gestartet. Nach dem vollständigen Umsatz aller NCO-Gruppen (NCO-Gehalt 0 %) wurde der Ansatz abgekühlt und das Lösungsmittel im Vakuum entfernt. Schließlich wurde der Solubilisator S9 (Mn = 8110 g/mol) in Form einer gelb gefärbten, hoch viskosen Flüssigkeit erhalten, welche vollständig wasserlöslich war.

Beispiel 7: Solubilisator S10 (Hyperverzweigter Polycarbonat-Kern auf Basis von Diethylcarbonat und dem Umsetzungsprodukt von Trimethylolpropan mit 15,7 molarem Überschuss Propylenoxid, funktionalisiert mit PEG-b-Polycaprolacton Blockcopolymer (Funktionalisierungsgrad 100%)).

7.1 Hyperverzweigter Polycarbonat-Kern mit terminalen Hydroxylgruppen

1149 g des trifunktionellen Alkohols TMP x 15,7 PO, 144 g Diethylcarbonat sowie 1 g Katalysator DBTL wurden wie in Synthesebeispiel 2 umgesetzt. Das gebildete Polymer (Mn = 4200 g/mol; Mw = 14500 g/mol; OH-Zahl: 85 mg KOH/g Polymer) wurde in Form einer gelb gefärbten, hoch viskosen Flüssigkeit erhalten, welche nicht wasserlöslich war.

7.2 Hyperverzweigter Polycarbonat-Kern, funktionalisiert mit PEG-b-Polycaprolacton Blockcopolymer (Funktionalisierungsgrad 100%)

7.2.1 150,0 g Polyethylenglykolmonomethylether (Mn = 500 g/mol) wurden vorgelegt und im Vakuum bei 90 °C von Wasserresten befreit. Nach dem Abkülen auf Raumtemperatur wurde der Ansatz unter Stickstoff gesetzt und das Polymer mit 205,0 g ε-Caprolacton versetzt. Das Gemisch wurde auf 90 °C erwärmt und die ringöffnende Polymerisation des Caprolactons durch Zugabe von 355 mg Butylzinn-tris(2-ethylhexanoat) gestartet. Der Ansatz wurde weitere 18 h bei 90 °C erhitzt und nach beendeter Reaktion auf Raumtemperatur abgekühlt. Das so erhaltene, OH-terminierte Blockcopolymer (Mn = 1180 g/mol) wurde ohne weitere Aufreinigung direkt in Stufe 2 eingesetzt.

7.2.2 200,0 g des Blockcopolymers 7.2.1 wurden vorgelegt, unter Stickstoff gesetzt und mit 34,1 g Isophorondiisocyanat versetzt. Das Gemisch wurde auf 50 °C erhitzt. Durch Zugabe von 30 mg Zink-neodecanoat, gelöst in 1 mL Butylacetat, wurde die Reaktion gestartet und im Verlauf von 4 h bei 50 °C bis auf einen NCO-Gehalt von 2,23 % gefahren. Anschließend wurde die Reaktion durch Abkülen auf -20 °C beendet. Das Umsetzungsprodukt wurde ohne weitere Aufarbeitung direkt in Stufe 7.2.3 eingesetzt.

7.2.3 7,0 g des hydrophoben hyperverzeigten Polycarbonat-Kerns 7.1 wurden vorgelegt und unter Stickstoff in 10,0 g Butylacetat gelöst. Nun wurde der Ansatz mit 20,0 g des Reaktionsgemischs 7.2.2 versetzt, auf 80 °C erhitzt und die Reaktion durch Zugabe von 27 mg DBTL, gelöst in 1 mL Butylacetat, gestartet. Nach dem vollständigen Umsatz aller NCO-Gruppen (NCO-Gehalt 0 %) wurde der Ansatz abgekühlt und das Lösungsmittel im Vakuum entfernt. Schließlich wurde der Solubilisator S10 (Mn = 13190 g/mol) in Form einer gelb gefärbten, hoch viskosen Flüssigkeit erhalten, welche vollständig wasserlöslich war.

Anwendungsbeispiele

Beispiel 8 Solubilisierung von Fipronil (technischer Wirkstoff, Reinheit 89,8%) mit handelsüblichen Adjuvantien und erfindungsgemäß eingesetzten Solubilisatoren

| *Adjuvans* | *Konz Adjuvans in %* | *Fipronil Löslichkeit in ppm* |
|---|---|---|
| ohne | 0 | 2,2 |
| Soprophor 4D384 | 1,0 | 5,9 |
| GK 2303/012 | 1,0 | 11 |
| Break Thru S 240 | 1,0 | 10 |
| Triton X-100 | 1,0 | 13 |
| Silwet L77 | 1,0 | 52,3 |
| Wettol LF 700 | 1,0 | 10 |
| Lutensol ON 70 | 1,0 | 63,2 |
| Rhodapex CD-128 | 1,0 | 11,3 |
| Plurafac LF 901 | 1,0 | 78,3 |
| *Solubilisator* | *Konz solubilisator in %* | *Fipronil Löslichkeit in ppm* |
| S5 VP :Laurylacrylate:Na-Acrylate 70:20:10 (%weight) | 1,0 | 156,8 |
| S4 VP :Laurylacrylate:Na-Acrylate 78:20:2 (%weight) | 1,0 | 189,2 |
| S1 VP :Laurylacrylate 90 :10 (%gewicht) | 1,0 | 119,6 |
| S2 VP :Laurylacrylate 80 :20 (%gewicht) | 1,0 | 197,7 |
| S3 VP :Laurylacrylate 70 :30 (%gewicht) | 1,0 | 189,4 |
| S7 MSA/Styrol/Plurafac LF 401 | 1,0 | 143,2 |
| S6 VP/LA/AMPS-Na/Na-acrylat 76:20:2:2 (%weight) | 1,0 | 115,8 |
| S9 | 1,0 | 179 |

Die Fipronilkonzentration wurde mittels UV Spektroskopie bei 278nm bestimmt dazu wurde die Absorption des Polymeren (1 Gew.% in Wasser) zunächst allein bestimmt. Anschließend wurde ein Überschuß an Fipronil hinzugegeben und über Nacht bei Raumtemperatur gerührt. Die zentrifugierte Lösung wurde nochmals bei 278nm im UV Gerät vermessen. Nach Abzug des entsprechenden Solubilisatorspektrums und Vergleich mittels einer vorher erstellten Fipronilkalibrierkurve konnte die Konzentration an gelöstem Fipronil bestimmt werden.

Versuchsaufbau

Eine Glassäule aus sechs Segmenten mit einer Länge von 27,5 cm, einem Durchmesser von 5 cm und einer Oberfläche (eines Querschnittes) von 19,6 $cm^2$ wurde mit Hilfe eines Vibrators mit Erde (LUFA 2,3 (sandiger Lehm) [USDA], pH 7,2, luftgetrocknet, TOC 1%, Dichte 1,24 $g/cm^3$ max WHC 28,9 g/100g) gefüllt.

Auf diese Säule wurden erfindungsgemäße und Vergleichsformulierungen appliziert (60 ml, enthaltend 37,5 mg Fipronil (625 ppm) und gegebenenfalls entsprechende Mengen Solubilisator). Nach Applikation wurden noch weitere 40mL Wasser nachappliziert.

Es wurde mit HPLC-MSD gemessen, wie viel % der ursprünglich applizierten Fipronil-Menge (625 ppm, 37,5 mg) sich in den Segmenten der Säule (0-2,5 cm, 2,5-7,5 cm, 7,5-12,5 cm, 12,5-17,5 cm und 17,5-22,5 cm) befand.

Die Bodenbeweglichkeit relativ zum Handelsprodukt Termidor SC wurde nach folgender Methode berechnet:

Bodenbeweglichkeit =
(Anteil Fipronil [%] in Segment 1) X 2,5 + (Anteil Fipronil [%] in Segment 2) X 7,5 +
(Anteil Fipronil [%] in Segment 3) X 12,5 + ... + (Anteil Fipronil [%] in Segment 6) X 27,5 / (Anteil Fipronil [%] in Segment 1 Termidor SC) X 2,5 + (Anteil Fipronil [%] in Segment 2 Termidor SC) X 7,5 + (Anteil Fipronil [%] in Segment 3 Termidor SC) X 12,5 +"" + (Anteil Fipronil [%] in Segment 6 Termidor SC) x 27,5)

Tankmix-Formulierungen (Tabelle 1)

Zu einer wässrigen Lösung von Polymer und gegebenenfalls Adjuvants wurde eine entsprechende Menge Fipronil (als Termidor® SC) gegeben, so dass die Konzentration an Fipronil 625 ppm betrug. Jeweils 60 ml der erhaltenen Lösung wurden auf die beschriebene Säule appliziert.

Die Bodenbeweglichkeit wurde wie oben beschrieben berechnet - als Referenz diente wiederum Termidor SC:

Tabelle 1 Tankmix Versuche

| | | Fipronil (625 ppm) und | | | Boden tiefe (cm) | Boden tiefe (cm) | Boden tiefe (cm) | Boden tiefe (cm) | Boden tiefe (cm) | Boden tiefe (cm) | Rel. Beweglichkeit zu Termidor SC |
|---|---|---|---|---|---|---|---|---|---|---|---|
| Bsp.-Nr. | Konzentration Polymer | Solubilisator | Adjuvans | Konz. | 0-2,5 | 2,5-7,5 | 7,5-12,5 | 12,5-17,5 | 17,5-22,5 | 22,5-27,5 | |
| V1 | - | - | - | | 83 | 17 | 0 | 0 | 0 | 0 | 100 |
| V2 | 300 ppm | S1 | - | | 94 | 5 | 1 | 0 | 0 | 0 | 84 |
| 9 | 625p pm | S3 | - | | 65 | 30 | 5 | 0 | 0 | 0 | 133 |
| 10 | 625p pm | S8 | - | | 72 | 25 | 3 | 0 | 0 | 0 | 120 |
| 11 | 625p pm | S2 | - | | 66 | 27 | 6 | 1 | 0 | 0 | 136 |
| 12 | 0,19 % | S8 | Soprophor 4D 384 | 0,062 % | 37 | 41 | 18 | 4 | 0 | 0 | 125* |
| 13 | 0,50% | S2 | - | | 53 | 40 | 7 | 0 | 0 | 0 | 154 |
| 14 | 1,00% | S2 | - | | 38 | 53 | 9 | 0 | 0 | 0 | 179 |
| 15 | 3,00% | S2 | - | | 24 | 47 | 25 | 2 | 1 | 1 | 240 |
| 16 | 1,00% | S2 | Soprophor 4D 384 | 0,50% | 33 | 46 | 17 | 3 | 1 | 0,4 | 215 |
| 17 | 1,00% | S2 | Soprophor 4D 384 | 1% | 49 | 33 | 11 | 7 | 1 | 0,4 | 197 |
| 18 | 1,00% | S2 | Break Thru S240 | 2% | 30 | 44 | 20 | 4 | 1 | 0,9 | 229 |
| 19 | 1,00% | S2 | Soprophor 4D 384 und Break Thru S240 | 1,0% + 1,0% | 63 | 25 | 7 | 4 | 1 | 0 | 156 |
| V3 | - | - | Soprophor 4D384 | 625ppm | 80 | 20 | 0 | 0 | 0 | 0 | 104 |
| V4 | - | - | Soprophor 4D384 | 0,2% | 77 | 23 | 0 | 0 | 0 | 0 | 108 |
| V5 | - | - | Soprophor 4D384 | 0,5% | 73 | 24 | 3 | 0 | 0 | 0 | 119 |
| V6 | - | - | Soprophor 4D 384 u Break Thru S240 | 1,5+1,5 % | 33 | 45 | 19 | 3 | 0 | 0 | 210 |
| V7 | - | - | Break Thru S240 | 3 | 43 | 44 | 11 | 2 | 0 | 0 | 181 |
| 20 | 3 | S2 | Soprophor 4D384 | 0,5 | 39 | 42 | 16 | 3 | 0 | 0 | 197 |

(fortgesetzt)

| | | Fipronil (625 ppm) und | | | Boden tiefe (cm) | Boden tiefe (cm) | Boden tiefe (cm) | Boden tiefe (cm) | Boden tiefe (cm) | Boden tiefe (cm) | Rel. Beweglichkeit zu Termidor SC |
|---|---|---|---|---|---|---|---|---|---|---|---|
| 21 | 3 | S2 | Soprophor 4D384 | 2 | 17 | 42 | 23 | 16 | 2 | 0 | 287 |
| 22 | 3 | S2 | Soprophor 4D384 | 3 | 17 | 33 | 27 | 19 | 3 | 1 | 313 |
| 23 | 0,5 | S2 | Soprophor 4D384 | 3 | 25 | 51 | 15 | 7 | 2 | 0 | 237 |
| 24 | 0,5 | S2 | Break Thru S240 | 3 | 36 | 53 | 10 | 1 | 0 | 0 | 187 |
| * unterschiedlicher Standard | | | | | | | | | | | |

Tabelle 1a Tankmix Versuche (Fipronil 1250 ppm)

| | | Fipronil (625 ppm) und | | | Boden tiefe (cm) | Boden tiefe (cm) | Boden tiefe (cm) | Boden tiefe (cm) | Boden tiefe (cm) | Boden tiefe (cm) | Rel. Beweglichkeit zu Termidor SC |
|---|---|---|---|---|---|---|---|---|---|---|---|
| Bsp.-Nr. | Konzentration Polymer | Solubilisator | Adjuvans | Konz. | 0-2,5 | 2,5-7,5 | 7,5-12,5 | 12,5-17,5 | 17,5-22,5 | 22,5-27,5 | |
| 25 | 0,19 % | S8 | Soprophor 4D 384 | 0,062 | 22 | 40 | 28 | 10 | 0 | 0 | 159* |
| * unterschiedlicher Standard | | | | | | | | | | | |

Tabelle 2 Beispiele 25-35 Bodenbeweglichkeitsuntersuchungen von Formulierungskonzentraten

| Bsp. Nr. | % Wiederfindung in Segmenten zwischen ... cm | | | | | | Rel. Beweglichkeit % | Wirkstoffgehalt (Fipronil) | Zusammensetzung der Formulierung (ohne Wirkstoff) |
|---|---|---|---|---|---|---|---|---|---|
| | 0-2,5 | 2,5-7,5 | 7,5-12,5 | 12,5-17,5 | 17,5-22,5 | 22,5-27,5 | | | |
| V8 | 34 | 51 | 15 | 0 | 0 | 0 | 194 | 96 g/l | Soprophor BSU 200 g/L + Soprophor 4D 384 300 g/L + DMSO 300 g/l + γ -Butyrolacton ad 1l (System ohne solubilisator) DC Typ |
| 25 | 29 | 47 | 23 | 1 | 0 | 0 | 216 | 50 g/l | S2 200g/L + Soprophor 4D384 300 g/L + DMSO 300 g/l + γ -Butyrolacton ad 1l DC Typ |
| 26 | 18 | 40 | 35 | 6 | 0 | 0 | 263 | 50 g/l | S8 200g/L + Soprophor 4D384 300 g/L + DMSO 300 g/l + γ -Butyrolacton ad 1l SL Typ |
| 27 | 13 | 37 | 41 | 9 | 0 | 0 | 290 | 50 g/l | S8 400 g/L + Soprophor 4D384 200 g/L + DMSO 250 g/L + γ -Butyrolacton ad 1l SL Typ |
| 28 | 20 | 49 | 30 | 0,26 | 0 | 0 | 236 | 96 g/l | S8 400 g/L + Soprophor 4D384 200 g/L DMSO 250 g/L + γ -Butyrolacton ad 1l DC Typ |
| 29 | 22 | 55 | 24 | 0 | 0 | 0 | 227 | 96 g/l | S8 400g/L + Soprophor 4D384 300 g/L + DMSO 200 g/L + γ -Butyrolacton ad 1l DC Typ |
| 30 | 14 | 38 | 38 | 10 | 0 | 0 | 287 | 50 g/l | S9 400 g/L + Soprophor 4D384 300 g/L + DMSO 200 g/L + γ -Butyrolacton ad 1l SL Typ |
| 31 | 19 | 40 | 39 | 2 | 0 | 0 | 258 | 96 g/l | S9 400g/L + Soprophor 4D384 300 g/L + DMSO 200 g/L + γ -Butyrolacton ad 11 DC Typ |
| 32 | 20 | 43 | 35 | 1 | 0 | 0 | 245 | 96 g/l | S9 200 g/L + Soprophor 4D384 300 g/L + DMSO 300 g/L + γ -Butyrolacton ad 1l DC Typ |
| 33 | 20 | 43 | 36 | 1 | 0 | 0 | 249 | 96 g/l | S9 300 g/L + Soprophor 4D384 300 g/L + DMSO 250 g/L + γ -Butyrolacton ad 1l DC Typ |
| 34 | 61 | 33 | 6 | 1 | 0 | 0 | 146 | 96g/L | S8 200 g/L + Soprophor 4D384 0 g/L + DMSO 250 g/L + γ -Butyrolacton ad 1l DC Typ |

(fortgesetzt)

| Bsp. Nr. | % Wiederfindung in Segmenten zwischen ... cm | | | | | | Rel. Beweglichkeit % | Wirkstoffgehalt (Fipronil) | Zusammensetzung der Formulierung (ohne Wirkstoff) |
|---|---|---|---|---|---|---|---|---|---|
| 35 | 47 | 41 | 9 | 3 | 0 | 0 | 175 | 96g/L | S8 400 g/L + Soprophor 4D384 0 g/L + DMSO 250 g/L + $\gamma$-Butyrolacton ad 1l SL Typ |
| V9 | 66 | 34 | 10 | 0 | 0 | 0 | 161 | 96g/L | Soprophor 4D384 400 g/L + DMSO 250 g/L + $\gamma$ - Butyrolacton ad 1l DC Typ |
| 36 | 14 | 40 | 31 | 15 | 0 | 0 | 176* | 96 g/l | S8 250 g/l + Soprophor 4D 384 60 g/l SC Typ |
| 37 | 12 | 37 | 32 | 14 | 0 | 0 | 182* | 96 g/l | S8 220 g/l +Soprophor 4D 384 80 g/l SC Typ |

* unterschiedlicher Standard

Table 2a Beispiele 38, 39 Bodenbeweglichkeitsuntersuchungen von Formulierungskonzentraten (mit 1250 ppm Fipronil)

| Bsp. Nr. | % Wiederfindung in Segmenten zwischen ... cm | | | | | | Rel. Beweglichkeit % | Wirkstoffgehalt (Fipronil) | Zusammensetzung der Formulierung (ohne Wirkstoff) |
|---|---|---|---|---|---|---|---|---|---|
| | 0-2,5 | 2,5-7,5 | 7,5-12,5 | 12,5-17,5 | 17,5-22,5 | 22,5-27,5 | | | |
| 38 | 10 | 29 | 32 | 27 | 2 | 0 | 208* | 96 g/l | S8 250 g/l + Soprophor 4D 384 60 g/l SC Typ |
| 39 | 10 | 28 | 31 | 30 | 1 | 0 | 211* | 96 g/l | S8 220 g/l + Soprophor 4D 384 80 g/l SC Typ |

* unterschiedlicher Standard

Table 3 Beispiele 40-42 Bodenbeweglichkeitsuntersuchungen von SC-Formulierungskonzentraten mit Li10 Boden (Ton 6%, Lehm 13 %, Sand 81 %, org. C 0,9 %, pH 5.9 [$CaCl_2$], max WHL: 24.29 g/100g) SC-Formulierung gemäß Beispiel 39, Fipronil 625 ppm

| Bsp. Nr. | % Wiederfindung in Segmenten zwischen ... cm | | | | | | Rel. Beweglichkeit % | Wirkstoffgehalt (Fipronil) | Zusammensetzung der Formulierung (ohne Wirkstoff) |
|---|---|---|---|---|---|---|---|---|---|
| | 0-2,5 | 2,5-7,5 | 7,5-12,5 | 12,5-17,5 | 17,5-22,5 | 22,5-27,5 | | | |
| 40 | 3 | 11 | 18 | 21 | 26 | 20 | 161 | 96 g/l | SC Formulierung |
| 41 | 4 | 12 | 15 | 20 | 28 | 22 | 163 | 96 g/l | SC Formulierung |
| 42 | 4 | 11 | 17 | 22 | 23 | 23 | 162 | 96 g/l | SC Formulierung |
| V10 | 17 | 31 | 23 | 15 | 9 | 5 | 103 | 96 g/l | Termidor SC |
| V11 | 16 | 35 | 23 | 15 | 8 | 3 | 98 | 96 g/l | Termidor SC |
| V12 | 16 | 35 | 22 | 15 | 8 | 5 | 100* | 96 g/l | Termidor SC |
| * Standard | | | | | | | | | |

Die Beispiele belegen, dass durch Zusatz von erfindungsgemäßen Solubilisatoren, insbesondere in Konzentrationen größer der Wirkstoffkonzentration, eine signifikante Erhöhung der Bodenbeweglichkeit auftritt, die durch Adjuvantien noch etwas verbessert werden kann. Die verbesserte Bodenbeweglich tritt sowohl in Tankmixsystemen (Bsp. 9-24) als auch in Fertigformulierungen (Bsp. 25-35) auf welche einen erfindungsgemäßen polymeren Solubilisator enthalten.

## Patentansprüche

1. Verwendung eines polymeren Solubilisators zur Erhöhung der Bodenbeweglichkeit eines schwerlöslichen Insektizids, wobei der polymere Solubilisator die Eigenschaft besitzt, dass der insektizide Wirkstoff in einer 1 gew.-%igen wässrigen Lösung des polymeren Solubilisators bei 25°C und 1,01325 bar eine mindestens vierzigmal höhere Löslichkeit aufweist als unter gleichen Bedingungen in reinem Wasser, und wobei das Gewichtsverhältnis von Wirkstoff zu Solubilisator $\leq 1$ ist, und wobei der Solubilisator gewählt ist aus den Gruppen A1, B1 und D:

   A1. Hyperverzweigte Polycarbonate, bei denen das hyperverzweigte Polycarbonat verknüpft ist mit mindestens einem linearen oder Kamm-förmigen Polymer und/oder mindestens einer funktionalen $C_1$-$C_{24}$-Einheit enthaltend eine Säuregruppe, eine Aminogruppe oder mindestens zwei Hydroxygruppen;
   B1. Vinyllactam-Copolymere, erhältlich aus

      B1-1. 60-99 Gew.-% (bezogen auf das gesamte Copolymer) 5-7 gliedrigem 1-Vinyl-2-lactam und
      B1-2. 1 bis 40 Gew.-% mindestens eines Monomeren ausgewählt aus der Gruppe der
      B1-21 $C_8$-$C_{30}$-Alkylester von monoethylenisch ungesättigten $C_3$-$C_8$-Carbonsäuren,
      B1-22 N-Alkyl- oder N,N-Dialkylsubstituierten Amide der Acrylsäure oder der Methacrylsäure mit $C_8$ bis $C_{30}$-Alkylresten,
      B1-23 Vinylester von aliphatischen unverzweigten $C_8$-$C_{30}$-Carbonsäuren,
      B1-24 der $C_8$-$C_{30}$-Alkyl-Vinylether,

   wobei sich die Gew.-%-Angaben der Einzelkomponenten zu 100 Gew.-% addieren;
   D. Copolymere basierend auf ethylenisch ungesättigten Dicarboxylmono- und -diestern, erhältlich aus

      D1 mindestens einem Monomer aus der Gruppe der Olefine, Vinylether und Styrol und
      D2 mindestens einem Monomer aus der Gruppe der Mono- und Diester von ethylenisch ungesättigten Dicarbonsäuren, wobei die Alkoholgruppe der Ester eine Struktur der Formel (V) hat,

$$-(R^{10}\text{-}O)_n\text{-}(R^{11}\text{-}O)_p\text{-}R^{12} \qquad (V)$$

      wobei die Symbole und Indizes folgende Bedeutung haben:
      $R^{10}$ ist 1,2-Propylen oder 2,3-Propylen;
      $R^{11}$ ist Ethylen;
      $R^{12}$ ist H, unverzweigtes oder verzweigtes $C_1$-$C_{40}$-Alkyl, Phenyl, Phenyl substituiert mit $C_1$-$C_{20}$-Alkyl, Benzyl, Benzyl substituiert mit $C_1$-$C_{20}$-Alkyl;
      n ist eine ganze Zahl von 0 bis 140 und
      p ist eine ganze Zahl von 0 bis 100,

   wobei die Summe von n und p mindestens 1 ist.

2. Verwendung gemäß Anspruch 1, wobei das Insektizid ausgewählt ist aus der Gruppe Fipronil, Allethrin, Alpha-Cypermethrin, Beta-Cyfluthrin, Bifenthrin, Bioallethrin, 4-Chlor-2-(2-chlor-2methylpropyl)-5-[(6-iod-3-pyridinyl)methoxy]-3(2H)-pyridazinone (CAS-RN: 120955-77-3), Chlorantraniliprole, Chlorfenapyr, Chlorpyrifos, Cyantraniliprole, Cyfluthrin, Cyhalothrin, Cypermethrin, Deltamethrin, Etofenprox, Fenoxycarb, Flufenoxuron, Hydramethylnon, Imidacloprid, Indoxacarb, Metaflumizone, Permethrin, Pyriproxifen, Tebufenozide und Tralomethrin.

3. Verwendung gemäß Anspruch 2, wobei das Insektizid Fipronil ist.

4. Verwendung gemäß einem der Ansprüche 1 bis 3, wobei der Solubilisator gewählt ist aus der Gruppe A1.

5. Verwendung gemäß einem der Ansprüche 1 bis 3, wobei der Solubilisator gewählt ist aus der Gruppe B1.

6. Verwendung gemäß einem der Ansprüche 1 bis 3, wobei der Solubilisator gewählt ist aus der Gruppe D.

7. Verwendung gemäß einem der Ansprüche 1 bis 6, wobei eine Mischung aus zwei oder mehr polymeren Solubilisatoren eingesetzt wird.

8. Verwendung gemäß einem der Ansprüche 1 bis 7, wobei das Gewichtsverhältnis von Wirkstoff(en) und Solubilisator(en) von 1:1 bis 1:200 beträgt.

9. Verwendung nach einem der Ansprüche 1 bis 8, wobei neben Insektizid (a) und Solubilisator(en) (b) ein oder mehrere Aduvantien (c) aus den Gruppen:

Z1 Tristyrylalkylethersulfate oder Phosphate, wie 2,4,6-Tris[1-(phenyl)ethyl]phenyl-omega-hydroxy-poly(oxyethylen)sulfat
Z2 nichtionische Tenside basierend auf Perfluoralkylethoxylat
Z3 eine Mischung aus 83% hochraffiniertem Petroleumöl auf Paraffinbasis und 17% Alkylarylpolyoxyethylenglykolen;
Z4 Polyether oder organomodifizierte Tri- und Polysiloxane, wie modifizierte Polysiloxanpolyether
Z5 eine nichtionische Tensid-Mischung aus Alkyloxypolyethylenoxyethanolen der Formel $CH_3CH[(CH_2)_nCH_3][O(C_2H_4O)_mH]$ mit n = 9-15 und m = 3-40;
Z6 eine Silikontensidmischung aus 100% 2-(3-hydoxypropyl)heptamethyltrisiloxan, ethoxyliertem Acetat, Allyloxypolyethylenglykol-monoallylacetat un Polyethylenglykol-diacetat;
Z7 ein bioabbaubares, gering schäumendes nichtionisches Tensid enthaltend Primäralkyl-polyoxyethylen-ether, freie Fettsäuren und Adjuvantien;
Z8 eine nichtionische Tensidmischung auf Sojabohnen basierenden Fettsäure- und Alkohol Ethoxylaten;
Z9 eine anionische Tensidmischung enthaltend 58% Ammonium n-Alkoholether-sulfat;
Z10 eine anionische Tensidmischung enthaltend 58% Ammonium Nonylphenolether-sulfat;
Z11 eine Mischung aus Polyalkylenoxid-modifiziertem Polydimethylsiloxan und nichtionischen Tensiden;
Z12 ein nichtionisches Detergens aus 100% Polyoxyethylen-(10)-iso-octylcyclohexyl-ether und/oder
Z13 alkoxylierte Fettalkohole und/oder Fettsäuren, welche zusätzlich jeweils verethert, sulfoniert oder phosphoniert sein können,

eingesetzt werden.

10. Verwendung nach einem der Ansprüche 1 bis 8, wobei kein Adjuvans gemäß Anspruch 9 eingesetzt wird.

11. Verfahren zur Verbesserung der Bodenbeweglichkeit von schwerlöslichen Insektiziden, wobei man eine Kombination aus Insektizid und einem polymeren Solubilisator gemäß einem der Ansprüche 1 bis 10 in einer wässrigen Applikationsform auf den zu behandelnden Boden aufbringt.

12. Verfahren zur Bekämpfung von bodenbürtigen, invertrebraten Schädlingen, wobei man

a) mindestens einen schwerlöslichen insektiziden Wirkstoff und
b) mindestens einen polymeren Solubilisator, welcher die Eigenschaft aufweist, dass der termitizide Wirkstoff in einer 1 gew.-%igen wässrigen Lösung des polymeren Solubilisators bei 25°C und 1,01325 bar eine mindestens vierzigmal höhere Löslichkeit aufweist als unter gleichen Bedingungen in reinem Wasser, und gewählt ist aus der Gruppe der Solubilisatoren A1 und B1 gemäß Anspruch 1,

in einem Gewichtsverhältnis (a:b) ≤ 1 in einer wässrigen Applikationsform auf oder in einen Boden, der von den Schädlingen genutzt wird, ausbringt.

13. Verfahren gemäß Anspruch 12, wobei die Schädlinge Ameisen sind und/oder sich auf dem Boden eine Zuckerrübenkultur befindet.

14. Verfahren gemäß Anspruch 12, wobei die Schädlinge Termiten sind, und wobei der insektizide Wirkstoff ein termitizider Wirkstoff ist.

15. Verfahren gemäß Anspruch 14, wobei der Boden sich unter einem oder im Umkreis von 10 m um ein Gebäude befindet.

**16.** Verfahren gemäß Anspruch 14 oder 15, wobei das Termitizid in Gräben mit einer Tiefe von 1-3 Inches (7,62 - 2,54 cm) ausgebracht wird.

**17.** Verfahren gemäß einem der Ansprüche 14 bis 16, wobei die Konzentration des Termitizids in der wässrigen Applikationsform mindestens 1000 ppm beträgt.

**18.** Verfahren gemäß einem der Ansprüche 12 bis 17, wobei der insektizide Wirkstoff Fipronil ist.

**19.** Verfahren gemäß einem der Ansprüche 12 bis 18, wobei ein Solubilisator A1 gemäß Anspruch 1 eingesetzt wird.

**20.** Verfahren gemäß einem der Ansprüche 12 bis 19, wobei der schwerlösliche insektizide Wirkstoff, der polymere Solubilisator und gegebenenfalls ein oder mehrere Adjuvantien als Formulierung eingesetzt werden.

**21.** Verfahren gemäß einem der Ansprüche 12 bis 19, wobei der polymere Solubilisator und/oder ein oder mehrere Adjuvantien als Tankmix der wässrigen Applikationsform zugesetzt werden.

**22.** Formulierung, enthaltend

a) einen oder mehrere Wirkstoffe aus der Gruppe Fipronil, Allethrin, Alpha-Cypermethrin, Beta-Cyfluthrin, Bifenthrin, Bioallethrin, 4-Chlor-2-(2-chlor-2methylpropyl)-5-[(6-iod-3-pyridinyl)methoxy]-3(2H)-pyridazinone (CAS-RN: 120955-77-3), Chlorantraniliprole, Chlorfenapyr, Chlorpyrifos, Cyantraniliprole, Cyfluthrin, Cyhalothrin, Cypermethrin, Deltamethrin, Etofenprox, Fenoxycarb, Flufenoxuron, Hydramethylnon, Imidacloprid, Indoxacarb, Metaflumizone, Permethrin, Pyriproxifen, Tebufenozide und Tralomethrin sowie
b) mindestens einen polymeren Solubilisator, welcher die Eigenschaft- aufweist, dass der Wirkstoff in einer 1 gew.-%igen wässrigen Lösung des polymeren Solubilisators bei 25°C und 1,01325 bar eine mindestens vierzigmal höhere Löslichkeit aufweist als unter gleichen Bedingungen in reinem Wasser aus der Gruppe A1 gemäß Anspruch 1

in einem Gewichtsverhältnis (a:b) ≤ 1.

**23.** Formulierung gemäß Anspruch 22 in Form einer WG, SC, SL- oder DC-Formulierung, wobei der Wirkstoff Fipronil ist.

**24.** Formulierung gemäß Anspruch 22 oder 23, enthaltend als zusätzliche Komponente

c) ein oder mehrere der Adjuvantien aus den Gruppen Z1-Z13 gemäß Anspruch 9.

## Claims

**1.** The use of a polymeric solubilizer for increasing the soil mobility of a sparingly soluble insecticide, wherein the polymeric solubilizer has the property that the active insecticidal ingredient in a 1% by weight aqueous solution of the polymeric solubilizer at 25°C and 1.01325 bar has a solubility at least forty times higher than under the same conditions in pure water, and wherein the weight ratio of active ingredient to solubilizer is ≤ 1, and wherein the solubilizer is selected from groups A1, B1 and D:

A1. hyperbranched polycarbonates in which the hyperbranched polycarbonate is bonded to at least one linear or comb-type polymer and/or at least one functional $C_1$-$C_{24}$ unit comprising an acid group, an amino group or at least two hydroxyl groups;
B1. vinyllactam copolymers obtainable from

B1-1. 60-99% by weight (based on the overall copolymer) of 5-7-membered 1-vinyl-2-lactam and
B1-2. 1 to 40% by weight of at least one monomer selected from the group of the
B1-21 $C_8$-$C_{30}$-alkyl esters of monoethylenically unsaturated $C_3$-$C_8$-carboxylic acids,
B1-22 N-alkyl- or N,N-dialkyl-substituted amides of acrylic acid or of methacrylic acid having $C_8$ to $C_{30}$-alkyl radicals,
B1-23 vinyl esters of aliphatic unbranched $C_8$-$C_{30}$-carboxylic acids,
B1-24 the $C_8$-$C_{30}$-alkyl vinyl ethers,

where the percentages by weight of the individual components add up to 100% by weight;
D. copolymers based on ethylenically unsaturated dicarboxylic mono- and diesters, obtainable from

D1 at least one monomer from the group of the olefins, vinyl ethers and styrene and
D2 at least one monomer from the group of the mono- and diesters of ethylenically unsaturated dicarboxylic acids, where the alcohol group of the ester has a structure of the formula (V)

$$(R^{10}\text{-}O)_n\text{-}(R^{11}\text{-}O)_p\text{-}R^{12} \qquad (V)$$

where the symbols and indices are each defined as follows:

$R^{10}$ is 1,2-propylene or 2,3-propylene;
$R^{11}$ is ethylene;
$R^{12}$ is H, unbranched or branched $C_1$-$C_{40}$-alkyl, phenyl, phenyl substituted by $C_1$-$C_{20}$-alkyl, benzyl, benzyl substituted by $C_1$-$C_{20}$-alkyl;
n is an integer from 0 to 140, and
p is an integer from 0 to 100,

where the sum of n and p is at least 1.

2. The use according to claim 1, wherein the insecticide is selected from the group of fipronil, allethrin, alpha-cypermethrin, beta-cyfluthrin, bifenthrin, bioallethrin, 4-chloro-2-(2-chloro-2-methylpropyl)-5-[(6-iodo-3-pyridinyl)methoxy]-3(2H)-pyridazinone (CAS-RN: 120955-77-3), chlorantraniliprole, chlorfenapyr, chlorpyrifos, cyantraniliprole, cyfluthrin, cyhalothrin, cypermethrin, deltamethrin, etofenprox, fenoxycarb, flufenoxuron, hydramethylnon, imidacloprid, indoxacarb, metaflumizone, permethrin, pyriproxyfen, tebufenozide and tralomethrin.

3. The use according to claim 2, wherein the insecticide is fipronil.

4. The use according to any one of claims 1 to 3, wherein the solubilizer is selected from group A1.

5. The use according to any one of claims 1 to 3, wherein the solubilizer is selected group B1.

6. The use according to any one of claims 1 to 3, wherein the solubilizer is selected from group D.

7. The use according to any one of claims 1 to 6, wherein a mixture of two or more polymeric solubilizers is used.

8. The use according to any one of claims 1 to 7, wherein the weight ratio of active ingredient (s) and solubilizer(s) is from 1:1 to 1:200.

9. The use according to any one of claims 1 to 8, wherein, as well as insecticide (a) and solubilizer(s) (b), one or more adjuvants (c) from the groups of:

Z1 tristyrylalkyl ether sulfates or phosphates, such as 2,4,6-tris[1-(phenyl)ethyl]phenyl-omega-hydroxy-poly(oxyethylene)sulfate
Z2 nonionic surfactants based on perfluoroalkyl ethoxylate
Z3 a mixture of 83% highly refined petroleum oil based on paraffin and 17% alkylarylpolyoxyethylene glycols;
Z4 polyethers or organomodified tri- and polysiloxanes, such as modified polysiloxane polyethers
Z5 a nonionic surfactant mixture of alkyloxypolyethyleneoxyethanols of the formula $CH_3CH[(CH_2)_nCH_3][O(C_2H_4O)_mH]$ where n = 9-15 and m = 3-40;
Z6 a silicone surfactant mixture of 100% 2-(3-hydroxypropyl)heptamethyltrisiloxane, ethoxylated acetate, allyloxypolyethylene glycol monoallylacetate and polyethylene glycol diacetate;
Z7 a biodegradable, low-foaming nonionic surfactant comprising primary alkyl polyoxyethylene ethers, free fatty acids and adjuvants;
Z8 a nonionic surfactant mixture of fatty acid and alcohol ethoxylates based on soybeans;
Z9 an anionic surfactant mixture comprising 58% ammonium n-alcohol ether sulfate;
Z10 an anionic surfactant mixture comprising 58% ammonium nonylphenol ether sulfate;
Z11 a mixture of polyalkylene oxide-modified polydimethylsiloxane and nonionic surfactants;
Z12 a nonionic detergent composed of 100% polyoxyethylene (10)-isooctyl cyclohexyl ether and/or

Z13 alkoxylated fatty alcohols and/or fatty acids, which may additionally each be etherified, sulfonated or phosphonated,

are used.

**10.** The use according to any one of claims 1 to 8, wherein no adjuvant according to claim 9 is used.

**11.** A method for improving the soil mobility of sparingly soluble insecticides, wherein a combination of insecticide and a polymeric solubilizer according to any one of claims 1 to 10 in an aqueous application form is applied to the soil to be treated.

**12.** A method for controlling soil-dwelling invertebrate pests, wherein

a) at least one sparingly soluble active insecticidal ingredient and
b) at least one polymeric solubilizer which has the property that the active termiticidal ingredient in a 1% by weight aqueous solution of the polymeric solubilizer at 25°C and 1.01325 bar has a solubility at least forty times higher than under the same conditions in pure water, and is selected from the group of the solubilizers A1 and B1 according to claim 1

in a weight ratio (a:b) ≤ 1 in an aqueous application form are applied to or into a soil used by the pests.

**13.** The method according to claim 12, wherein the pests are ants and/or are present on the soil of a sugarbeet crop.

**14.** The method according to claim 12, wherein the pests are termites, and wherein the active insecticidal ingredient is an active termiticidal ingredient.

**15.** The method according to claim 14, wherein the soil is present under a building or within a radius of 10 m thereof.

**16.** The method according to claim 14 or 15, wherein the termiticide is applied in trenches with a depth of 1-3 inches (7.62 - 2.54 cm).

**17.** The method according to any one of claims 14 to 16, wherein the concentration of the termiticide in the aqueous application form is at least 1000 ppm.

**18.** The method according to any one of claims 12 to 17, wherein the active insecticidal ingredient is fipronil.

**19.** The method according to any one of claims 12 to 18, wherein a solubilizer A1 according to claim 1 is used.

**20.** The method according to any one of claims 12 to 19, wherein the sparingly soluble active insecticidal ingredient, the polymeric solubilizer and optionally one or more adjuvants are used as the formulation.

**21.** The method according to any one of claims 12 to 19, wherein the polymeric solubilizer and/or one or more adjuvants are added as a tank mix to the aqueous application form.

**22.** A formulation comprising

a) one or more active ingredients from the group of fipronil, allethrin, alpha-cypermethrin, beta-cyfluthrin, bifenthrin, bioallethrin, 4-chloro-2-(2-chloro-2-methylpropyl)-5-[(6-iodo-3-pyridinyl)methoxy]-3(2H)-pyridazinone (CAS-RN: 120955-77-3), chlorantraniliprole, chlorfenapyr, chlorpyrifos, cyantraniliprole, cyfluthrin, cyhalothrin, cypermethrin, deltamethrin, etofenprox, fenoxycarb, flufenoxuron, hydramethylnon, imidacloprid, indoxacarb, metaflumizone, permethrin, pyriproxyfen, tebufenozide and tralomethrin, and
b) at least one polymeric solubilizer which has the property that the active ingredient in a 1% by weight aqueous solution of the polymeric solubilizer at 25°C and 1.01325 bar has a solubility at least forty times higher than under the same conditions in pure water, from group A1 according to claim 1

in a weight ratio (a:b) of ≤ 1.

**23.** A formulation according to claim 22 in the form of a WG, SC, SL or DC formulation, wherein the active ingredient

is fipronil.

**24.** A formulation according to claim 22 or 23 comprising, as additional component,

c) one or more of the adjuvants from groups Z1-Z13 according to claim 9.

## Revendications

**1.** Utilisation d'un solubilisant polymère pour l'augmentation de la mobilité dans le sol d'un insecticide difficilement soluble, le solubilisant polymère ayant la propriété que dans une solution aqueuse à 1 % en poids du solubilisant polymère la substance active insecticide présente à 25 °C et sous 1,01325 bar une solubilité au moins quarante fois plus grande que dans les mêmes conditions dans de l'eau pure, et le rapport pondéral de la substance active au solubilisant étant ≤ 1, et le solubilisant étant choisi dans les groupes A1, B1 et D :

A1. Polycarbonates hyper-ramifiés, dans lesquels le polycarbonate hyper-ramifié est attaché à au moins un polymère linéaire ou en forme de peigne et/ou à au moins une unité fonctionnelle en $C_1$-$C_{24}$ contenant un groupe acide, un groupe amino ou au moins deux groupes hydroxy ;
B1. Copolymères de vinyllactame, pouvant être obtenus à partir de

B1-1. 60-99 % en poids (par rapport au copolymère total) de 1-vinyl-2-lactame à 5-7 chaînons et
B1-2. 1 à 40 % en poids d'au moins un monomère choisi dans le groupe des
B1-21 esters alkyliques en $C_8$-$C_{30}$ d'acides carboxyliques en $C_3$-$C_8$ à insaturation monoéthylénique,
B1-22 amides N-alkyl- ou N,N-dialkylsubstitués de l'acide acrylique ou de l'acide méthacrylique à radicaux alkyle en $C_8$-$C_{30}$,
B1-23 esters vinyliques d'acides carboxyliques en $C_8$-$C_{30}$ aliphatiques non ramifiés,
B1-24 des éthers alkyl($C_8$-$C_{30}$)-vinyliques,

les données en % en poids des composants individuels s'ajoutant pour faire 100 % en poids ;
D. Copolymères à base de mono- et diesters dicarboxyliques à insaturation éthylénique, obtenus à partir de

D1 au moins un monomère choisi dans le groupe des oléfines, éthers vinyliques et styrène et
D2 au moins un monomère choisi dans le groupe des mono- et diesters d'acides dicarboxyliques à insaturation éthylénique, le groupe alcool des esters ayant une structure de formule (V),

$$-(R^{10}\text{-}O)_n\text{-}(R^{11}\text{-}O)_p\text{-}R^{12} \qquad (V)$$

les symboles et indices ayant la signification suivante :

$R^{10}$ est un groupe 1,2-propylène ou 2,3-propylène ;
$R^{11}$ est le groupe éthylène ;
$R^{12}$ est H, un groupe alkyle en $C_1$-$C_{40}$ ramifié ou non ramifié, phényle, phényle substitué par alkyle en $C_1$-$C_{20}$, benzyle, benzyle substitué par alkyle en $C_1$-$C_{20}$ ;
n est un nombre entier valant de 0 à 140 et
p est un nombre entier valant de 0 à 100,
la somme de n et p étant égale au moins à 1.

**2.** Utilisation selon la revendication 1, dans laquelle l'insecticide est choisi dans le groupe constitué par le fipronil, l'alléthrine, l'alpha-cyperméthrine, la bêta-cyfluthrine, la bifenthrine, la bioalléthrine, la 4-chloro-2-(2-chloro-2-méthylpropyl)-5-[(6-iodo-3-pyridinyl)méthoxy]-3(2H)-pyridazinone (CAS-RN : 120955-77-3), le chlorantraniliprole, le chlorfénapyr, la chlorpyrifos, le cyantraniliprole, la cyfluthrine, la cyhalothrine, la cyperméthrine, la deltaméthrine, l'étofenprox, le fénoxycarbe, le flufénoxuron, l'hydraméthylnone, l'imidaclopride, l'indoxacarbe, la métaflumizone, la perméthrine, le pyriproxyfène, le tébufénozide et la tralométhrine.

**3.** Utilisation selon la revendication 2, dans laquelle l'insecticide est le fipronil.

**4.** Utilisation selon l'une quelconque des revendications 1 à 3, dans laquelle le solubilisant est choisi dans le groupe A1.

**5.** Utilisation selon l'une quelconque des revendications 1 à 3, dans laquelle le solubilisant est choisi dans le groupe B1.

**6.** Utilisation selon l'une quelconque des revendications 1 à 3, dans laquelle le solubilisant est choisi dans le groupe D.

**7.** Utilisation selon l'une quelconque des revendications 1 à 6, dans laquelle on utilise un mélange de deux ou plus de deux solubilisants polymères.

**8.** Utilisation selon l'une quelconque des revendications 1 à 7, dans laquelle le rapport pondéral de substance(s) active(s) et solubilisant(s) vaut de 1:1 à 1:200.

**9.** Utilisation selon l'une quelconque des revendications 1 à 8, dans laquelle en plus d'insecticide (a) et de solubilisant (s) (b) on utilise un ou plusieurs adjuvants (c) choisis dans les groupes :

Z1 des tristyrylalkyléthersulfates ou phosphates, tels que le 2,4,6-tris[1-(phényl)éthyl]phényl-oméga-hydroxy-poly(oxyéthylène)sulfate
Z2 des tensioactifs non ioniques à base de perfluoroalkyléthoxylate
Z3 un mélange de 83 % d'huile de pétrole hautement raffinée à base de paraffine et 17 % d'alkylaryl-polyoxyéthylène-glycols ;
Z4 des polyéthers ou des tri- et polysiloxanes à modification organique, tels que des polysiloxane-polyéthers modifiés
Z5 un mélange de tensioactifs non ioniques à base d'alkyloxypolyéthylène-oxyéthanols de formule $CH_3CH[(CH_2)_nCH_3][O(C_2H_4O)_mH]$ où n = 9-15 et m = 3-40 ;
Z6 un mélange de tensioactifs silicone constitué à 100 % de 2-(3-hydroxypropyl)heptaméthyltrisiloxane, acétate éthoxylé, monoallylacétate d'allyloxypolyéthylèneglycol et diacétate de polyéthylèneglycol ;
Z7 un tensioactif non ionique biodégradable, faiblement moussant, contenant des éthers alkyl primaire-polyoxyéthyléniques, des acides gras libres et des adjuvants ;
Z8 un mélange de tensioactifs non ioniques de produits d'éthoxylation d'alcools et d'acides gras à base de graines de soja ;
Z9 un mélange de tensioactifs anioniques contenant 58 % de n-alcool-éther-sulfate d'ammonium ;
Z10 un mélange de tensioactifs anioniques contenant 58 % de nonylphénol-éther-sulfate d'ammonium ;
Z11 un mélange de polydiméthylsiloxane modifié avec du polyoxyalkylène et de tensioactifs non ioniques ;
Z12 un détergent non ionique constitué à 100 % d'éther iso-octylcyclohexylique polyoxyéthylénique (10) et/ou
Z13 des acides gras et/ou alcools gras alcoxylés, qui peuvent en outre être chacun éthérifiés, sulfonés ou phosphonés.

**10.** Utilisation selon l'une quelconque des revendications 1 à 8, dans laquelle on n'utilise aucun adjuvant selon la revendication 9.

**11.** Procédé pour l'amélioration de la mobilité dans le sol d'insecticides difficilement solubles, dans lequel on applique sur le sol à traiter une association d'insecticide et d'un solubilisant polymère selon l'une quelconque des revendications 1 à 10, sous une forme d'application aqueuse.

**12.** Procédé pour la lutte contre des nuisibles invertébrés terricoles, dans lequel on applique sur ou dans un sol qui est occupé par les nuisibles

a) au moins une substance active insecticide difficilement soluble et
b) au moins un solubilisant polymère qui présente la propriété que dans une solution aqueuse à 1 % en poids du solubilisant polymère la substance active termiticide présente à 25 °C et sous 1,01325 bar une solubilité au moins quarante fois plus grande que dans les mêmes conditions dans de l'eau pure, et est choisi dans le groupe des solubilisants A1 et B1 selon la revendication 1,

en un rapport pondéral (a:b) ≤ 1, sous une forme d'application aqueuse.

**13.** Procédé selon la revendication 12, dans lequel les nuisibles sont des fourmis et/ou une culture de betteraves sucrières se trouve sur le sol.

**14.** Procédé selon la revendication 12, dans lequel les nuisibles sont des termites et dans lequel la substance active insecticide est une substance active termiticide.

**15.** Procédé selon la revendication 14, dans lequel le sol se trouve sous ou dans le rayon de 10 m autour d'un bâtiment.

**16.** Procédé selon la revendication 14 ou 15, dans lequel on applique le termiticide dans des tranchées ayant une profondeur de 1-3 pouces (7,62 - 2,54 cm).

**17.** Procédé selon l'une quelconque des revendications 14 à 16, dans lequel la concentration du termiticide sous la forme d'application aqueuse est d'au moins 1 000 ppm.

**18.** Procédé selon l'une quelconque des revendications 12 à 17, dans lequel la substance active insecticide est le fipronil.

**19.** Procédé selon l'une quelconque des revendications 12 à 18, dans lequel on utilise un solubilisant A1 selon la revendication 1.

**20.** Procédé selon l'une quelconque des revendications 12 à 19, dans lequel on utilise sous forme d'une composition la substance active insecticide difficilement soluble, le solubilisant polymère et éventuellement un ou plusieurs adjuvants.

**21.** Procédé selon l'une quelconque des revendications 12 à 19, dans lequel on ajoute à la forme d'application aqueuse le solubilisant polymère et/ou un ou plusieurs adjuvants sous forme de mélange en cuve.

**22.** Composition, contenant

a) une ou plusieurs substances actives choisies dans le groupe constitué par le fipronil, l'alléthrine, l'alpha-cyperméthrine, la bêta-cyfluthrine, la bifenthrine, la bioalléthrine, la 4-chloro-2-(2-chloro-2-méthylpropyl)-5-[(6-iodo-3-pyridinyl)-méthoxy]-3(2H)-pyridazinone (CAS-RN : 120955-77-3), le chlorantraniliprole, le chlorfénapyr, la chlorpyrifos, le cyantraniliprole, la cyfluthrine, la cyhalothrine, la cyperméthrine, la deltaméthrine, l'étofenprox, le fénoxycarbe, le flufénoxuron, l'hydraméthylnone, l'imidaclopride, l'indoxacarbe, la métaflumizone, la perméthrine, le pyriproxyfène, le tébufénozide et la tralométhrine ainsi que
b) au moins un solubilisant polymère qui présente la propriété que dans une solution aqueuse à 1 % en poids du solubilisant polymère la substance active présente à 25 °C et sous 1,01325 bar une solubilité au moins quarante fois plus grande que dans les mêmes conditions dans de l'eau pure, choisi dans le groupe A1 selon la revendication 1,

en un rapport pondéral (a:b) ≤ 1.

**23.** Composition selon la revendication 22, sous forme d'une formulation WG, SC, SL ou DC, la substance active étant le fipronil.

**24.** Composition selon la revendication 22 ou 23, contenant comme composant supplémentaire

c) un ou plusieurs des adjuvants choisis dans les groupes Z1-Z13 selon la revendication 9.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 03053345 A
- US 4303642 A
- WO 2008064990 A
- WO 2008065050 A
- WO 2008064986 A
- WO 2008064987 A
- WO 2008040786 A
- WO 2008058848 A
- WO 2006018135 A
- EP 09159881 A
- WO 2010130599 A1
- DE 10138216
- DE 10147712
- US 5556918 A
- EP 742238 A
- WO 9927916 A
- WO 2007017452 A
- WO 9927916 B1
- WO 2007017452 B1
- WO 2008064990 B1
- WO 2008064986 D

### In der Beschreibung aufgeführte Nicht-Patentliteratur

- The Pesticide Manual. British Crop Production Council, 2006
- Römpp Chemie Lexikon. Thieme Verlag, 1992, vol. 5, 4203